# EUROPÄISCHE PATENTSCHRIFT

(11) **EP 2 161 190 B1**
(45) Veröffentlichungstag und Bekanntmachung des Hinweises auf die Patenterteilung: **03.08.2011**
(21) Anmeldenummer: 09012071.8
(22) Anmeldetag: 18.06.2006
(51) Int. Cl.: B62M 1/12

(54) **Fahrrad mit Arm- und Beinantrieb**
Bicycle with arm and leg propulsion
Vélo doté d'un entraînement de bras et de jambe

(30) Priorität: 18.06.2005 DE 102005028530; 24.06.2005 EP 05013665; 15.07.2005 DE 102005033740; 22.09.2005 EP 05020622; 04.10.2005 EP 05021856
(43) Veröffentlichungstag der Anmeldung: 10.03.2010
(62) Teilanmeldung aus: 06012476.5
(73) Patentinhaber: Kraiß, Martin, 89081 Ulm (DE)
(72) Erfinder: Kraiß, Martin, 89081 Ulm (DE)

(56) Entgegenhaltungen:
- WO-A-01/03997
- DE-A1- 10 348 465
- DE-A1- 19 829 750
- US-A- 4 498 684

## Beschreibung

Bei der Erfindung handelt es sich um ein Fahrrad mit Arm und Beinantrieb.

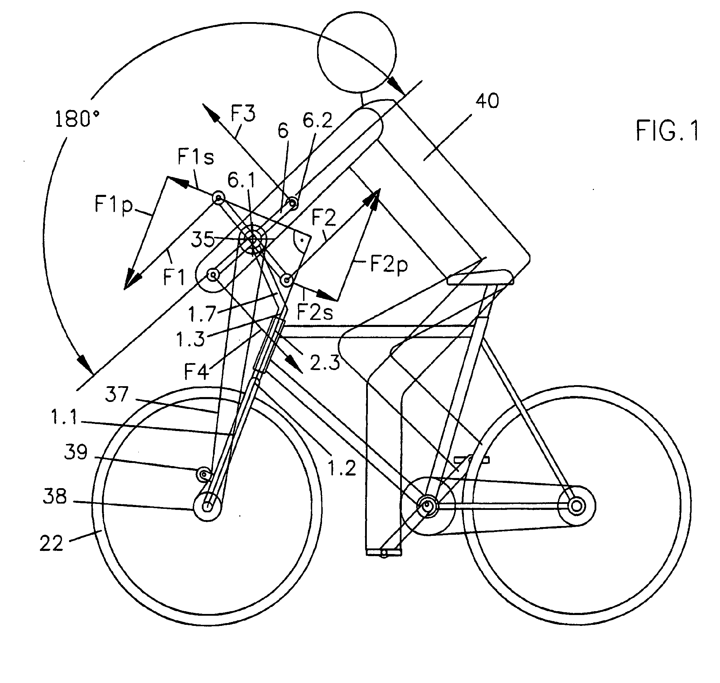

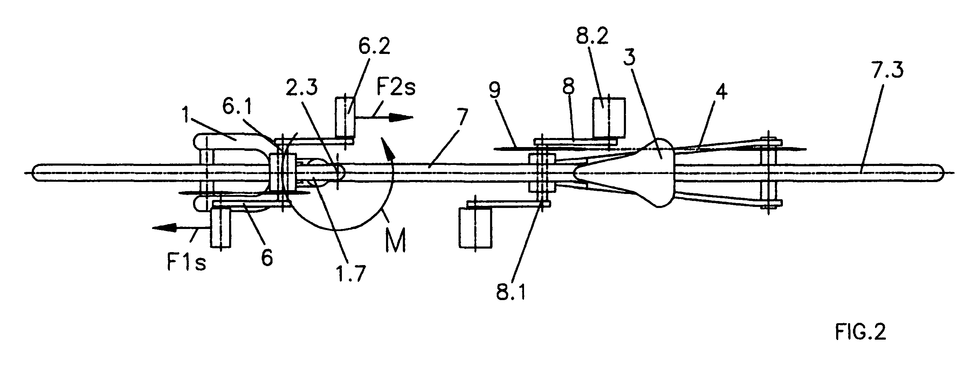

Ein Fahrrad ist ein Fahrzeug, das vom Fahrradfahrer mit Muskelkraft angetrieben wird. In der Regel ist es einspurig und besitzt zwei Räder. Es gibt aber auch dreirädrige, zweispurige Fahrräder, oder zweirädrige Fahrräder mit zusätzlichen Stützrädern.
Bei dem bekannten Fahrrad der Offenlegungsschrift DE 103 48 465 A1 treibt der Fahrradfahrer das Fahrrad über Handhebel an, welche er vor und zurückschwenkt. Der Fahrradfahrer lenkt das bekannte Fahrrad über die Handgriffe, die er beim Lenken schwenkt. Die Lenkkraft der Schwenkbewegung wird dabei über Seilzüge an die Vorderradgabel übertragen. Der Nachteil dieser Lenkung ist, dass die Handkräfte die zum Lenken aufgebracht werden gering sind. Darüber hinaus haben die Seilzüge der Lenkung eine hohe Reibung. Als Resultat sind die Lenkkräfte die an der Vorderradgabel ankommen sehr gering, denn diese Lenkkräfte sind in Summe die bereits geringen Handkräfte abzüglich der hohen Reibungskräfte der Seilzüge. Ein leichtgängiges Lenken ist mit diesem Fahrrad kaum möglich. Beim bekannten Fahrrad ist der Armantrieb wenig effektiv. Das Vor- und Zurückschwenken der Handhebel ist keine kontinuirliche Antriebsbewegung, sondern ist ein ständiges Beschleunigen und wieder Abbremsen der Antriebsbewegung. Insbesondere das ständige Abbremsen der Antriebsbewegung ist Energie, die vom Fahrradfahrer aufgebracht wird ohne in Vortrieb umgesetzt zu werden.
Andere bekannte Fahrräder mit Arm- und Beinantrieb werden über die Arme gelenkt und angetrieben. Der Armkurbelantrieb wird von den Armen angetrieben und besteht aus zwei Handkurbeln 6 mit Handkurbelgriffen 6.2 und einer Achse 6.1. Die Achse 6.1 der Handkurbeln 6 ist hierbei meist im Vorbau 1.7 der Gabel 1 gelagert (FIG.1). Auf den Handkurben 6 sind die Handkurbelgriffe 6.2 drehbar gelagert. Die Gabel 1 besteht aus den Gabelrohren 1.1, der Gabelbrücke und dem Gabellagerrohr 1.3. Der Vorbau 1.7 ist fest mit dem Gabellagerrohr 1.3 der Gabel 1 verbunden. Die Gabel 1 des Vorderrades 22 ist über das Lenkkopflager im Fahrradrahmen 7 drehbar, um die Lenkopflagerachse 2.3, gelagert. Somit lenkt der Fahrradfahrer 40 das Fahrrad über die Handkurbeln 6. Die Handkurbeln 6 treiben das Vorderrad 22 an. Dazu verbindet eine Antriebskette 37 das Antriebsritzel 35, das an der Handkurbel 6 befestigt ist, mit dem Antriebsritzel 38 des Vorderrades 22. Die Antriebskette 37 wird über die Spannrolle 39 gespannt. Die rechte und die linke Handkurbel 6 sind in einem 180° Winkel zueinander angeordnet. In dieser Winkelanordnung ist die Kurbelbewegung der Arme am effektivsten und gleichmäßigsten.
Während ein Arm an der einen Kurbel 6 zieht, drückt der andere Arm an der anderen Kurbel 6. Der Nachteil dieser Ausführung ist, dass der Antrieb über die Arme die Lenkbewegung stört. Dieser Nachteil wird in der Anmeldung Deutsches Patent DE 196 32 519 A1auf Seite 5, Zeile 18-24 beschrieben. Wenn der Fahrradfahrer 40 das Fahrrad mit seinen Armen über die Handkurbel 6 antreibt, dann wirkt an einem Handkurbelgriff 6.2 eine Kraft F3 und am zweiten Handkurbelgriff 6.2 eine Kraft F4 (FIG.1). Haben die Arme die Handkurbeln 6 um 90° weiter gedreht (gestrichelt dargestellt), dann wirken eine Kraft F1 und F2. Alle Kräfte F1, F2, F3, F4 kann man in jeweils eine Kraftkomponente senkrecht zur Lenkkopflagerachse 2.3 und eine Kraftkomponente parallel zur Lenkkopflagerachse 2.3 zerlegen. Für die Kraft F1 wirkt die Kraftkomponente F1s senkrecht und die Kraftkomponente F1p parallel zur Lenkkopflagerachse 2.3. Für die Kraft F2 wirkt die Kraftkomponente F2s senkrecht und die Kraftkomponente F2p parallel zur Lenkkopflagerachse 2.3. Die Kraftkomponenten die senkrecht zur Lenkkopflagerachse 2.3 wirken erzeugen ein Moment M um die Lenkkopflagerachse 2.3. Die Lenkkopflagerachse 2.3 ist die Lenkachse der Gabel 1. Die Draufsicht des Fahrrades in FIG.2 zeigt die Kraftkomponenten F1s und F2s die das Moment M erzeugen. Für eine Geradeausfahrt des Fahrrades muss dieses Moment M aufgehoben werden. Dieses Moment M kann nur durch ein entsprechendes Gegenlenken des Fahrradfahrers 40 aufgehoben werden. Dieses ständige Gegenlenken erfordert vom Fahrradfahrer 40 zusätzliche Kraft und Konzentration. Aus diesem Grund haben sich diese Fahrräder nicht durchgesetzt. Andere bekannte Fahrräder vermeiden, dass während des Kurbelns mit den Armen ein Moment M entsteht, indem bei ihnen die beiden Kurbeln 6 in einem Winkel 0° zueinander angeordnet sind. Diese Anordnung ist aber weniger effektiv, da beide Arme, abhängig von der jeweiligen Kurbelstellung, gleichzeitig an beiden Handkurbeigriffen 6.2 ziehen oder drücken. Außerdem ist der Bewegungsablauf beim Kurbeln nicht so gleichmäßig, wie bei einer Kurbelanordnung von 180°, da sich der Oberkörper, der Kurbeibewegung folgend, ständig vor und zurück bewegt.

Die Aufgabe der Erfindung ist es ein Fahrrad mit Arm- und Beinantrieb mit einer alternativen Lenkung auszustatten. Weiterhin ist es die Aufgabe der Erfindung ein Verfahren bereitzustellen, mit dem ein Fahrrad gefahren, gelenkt und mit den Armen und Beinen angetrieben werden kann. Bei dem Fahrrad soll der Fahrradfahrer seine Antriebskraft optimal auf das Fahrrad übertragen können. Weiterhin ist es die Aufgabe der Erfindung die Lenkung des Fahrrades vor dem Einfluss von Antriebskräften zu bewahren. Der Fahrradfahrer soll das Fahrrad mit seiner ganze Kraft antreiben können und dabei das Fahrrad sicher und präzise lenken können.

Die Erfindung löst das geschilderte Problem, indem der Arm- und der Beinantrieb Kurbelantriebe sind. Diese Antriebsart ist von allen Antriebsarten die effektivste und enspricht am ehesten der Ergonomie des Menschen. Das unerwünschte Moment M, das durch den Armkurbelantrieb auf die Lenkung wirkt, wird dabei durch die Erfindung auf ein Minimum verringert oder ganz kompensiert.
In den Ausführungsvarianten D lenkt der Fahrradfahrer das Fahrrad nicht über die Handkurbeln. Er lenkt es über ein Steuerelement und einen Stellmotor. Die Handkurbeln sind statt in der Gabel im Rahmen des Fahrrades gelagert. Dadurch wirkt das Moments M auf den Fahrradrahmen und den Körper des Fahrradfahrers anstatt auf die Lenkung.
Die Erfindung ermöglicht es dem Fahrradfahrer die Handkurbeln 6 mit seiner ganzen Kraft anzutreiben, ohne dass dadurch gefährliche Lenkeinflüsse entstehen. Der Fahrradfahrer kann zum Antrieb des Fahrrades seine ganze Arm- und Beinkraft einsetzen und dabei das Fahrrad sicher und präzise lenken.

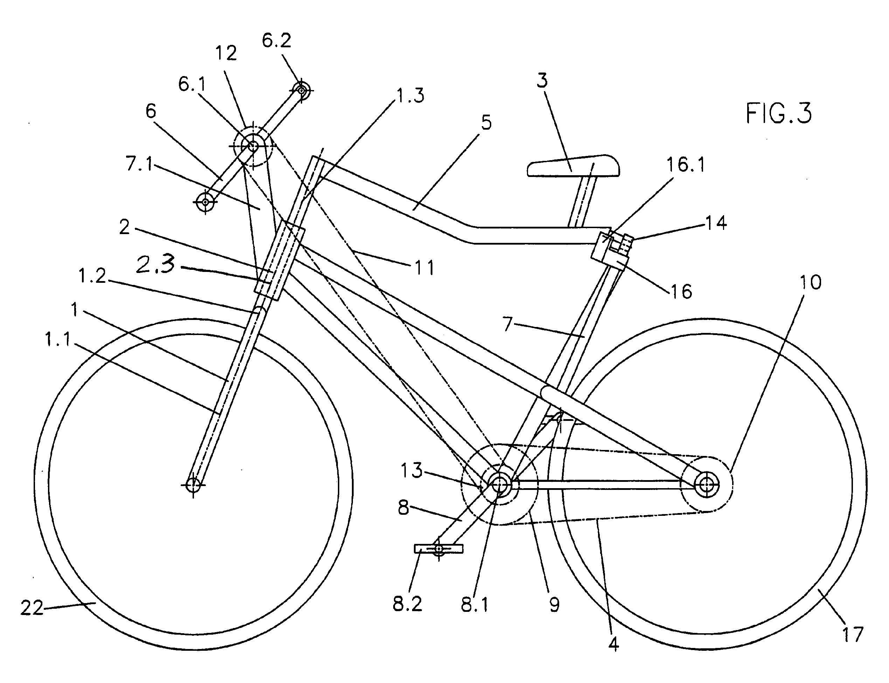

In den folgenden Varianten A (A1a bis A5) der Erfindung, die keine Ausführungsbeispiele der Erfindung darstellen, lenkt der Fahrradfahrer die Gabel 1 des Fahrrades über den Sattel 3 des Fahrrades. Er lenkt, indem er auf dem Sattel sitzt und über drehen und schwenken seiner Hüfte den Sattel bewegt. Das Kurbellager der Handkurbeln 6 befindet sich dabei in einem Rahmenstück 7.1 des Fahrradrahmens 7 (FIG.3). Dadurch werden die Kräfte, die beim Antrieb auf die Handkurbeln 6 wirken, vom Fahrradrahmen 7 aufgenommen. Die Lenkung ist damit vom Antrieb enkoppelt.
Noch ein Vorteil dieser Varianten ist, dass die Antriebskraft der Arme einfach über einen Synchronriemen 11 übertragen wird. Dieser Riemen verbindet die Handkurbeln 6 mit den Tretkurbeln 8 und verläuft parallel zur Antriebskette 4 des Hinterrades 17. Somit ist keine aufwendige Umlenkmechanik notwendig, welche erst den Armantrieb auf das Hinterrad ermöglicht, wenn sich die Armkurbeln 6 auf der sich schwenkenden Gabel befinden (vgl. PCT Patent WO 00/63066).
Weiterhin ist auch keine zweite Gangschaltung notwendig, über die die Antriebskräfte der Armkurbel auf das Vorderrad übertragen werden. Für den Arm und den Beinantrieb kann eine gemeinsame Schaltung verwendet werden, was Gewicht und Kosten spart.

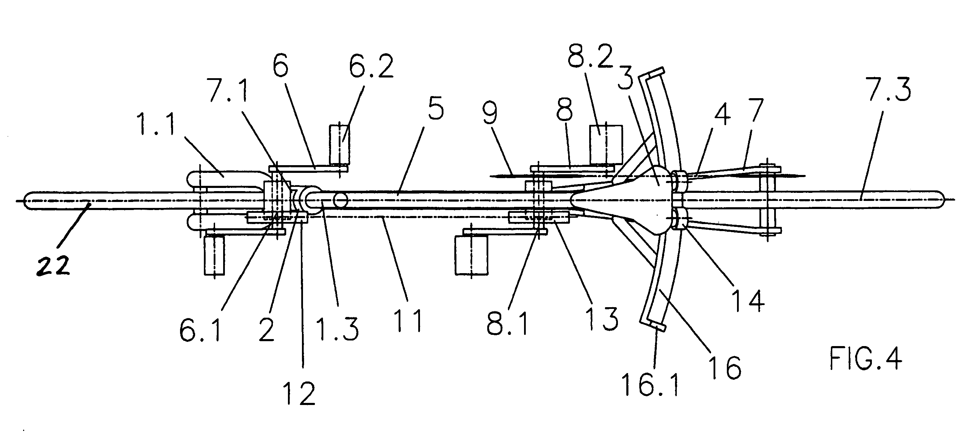

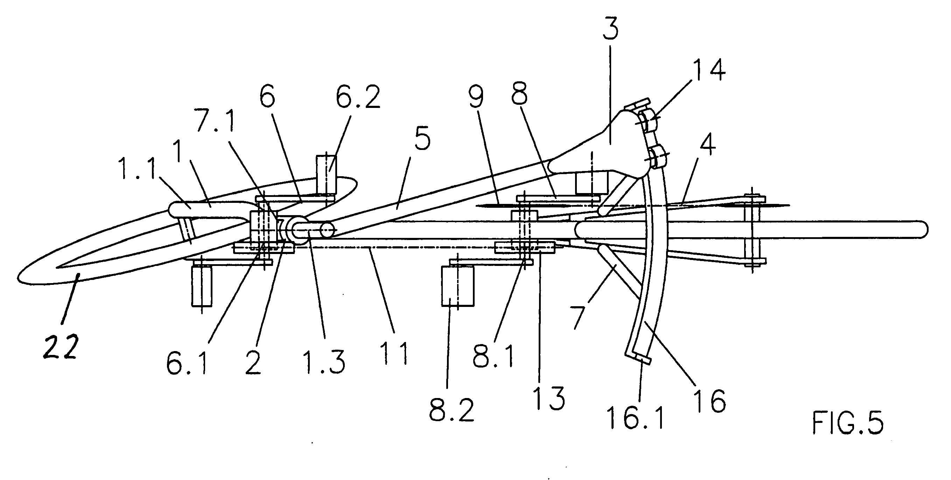

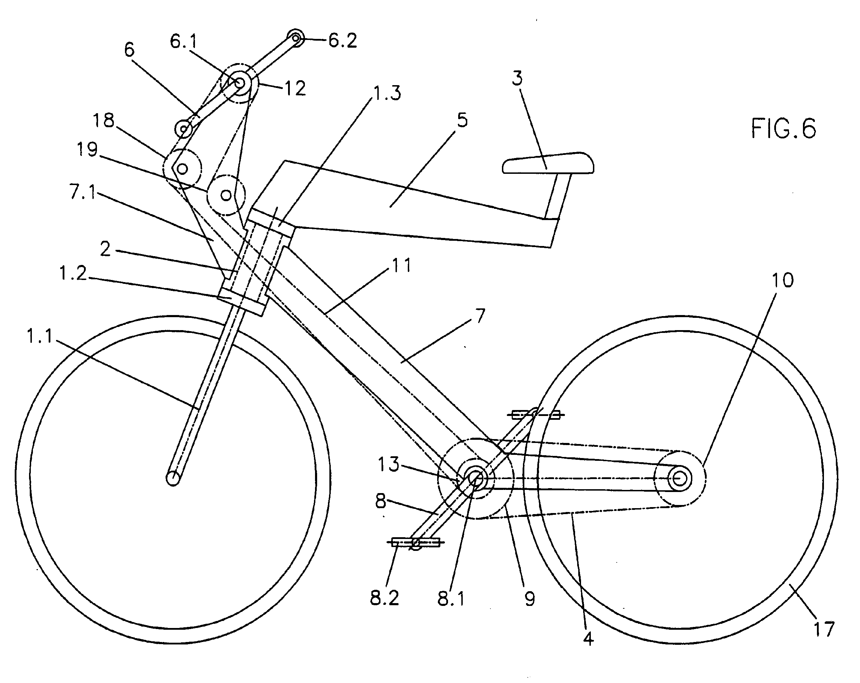

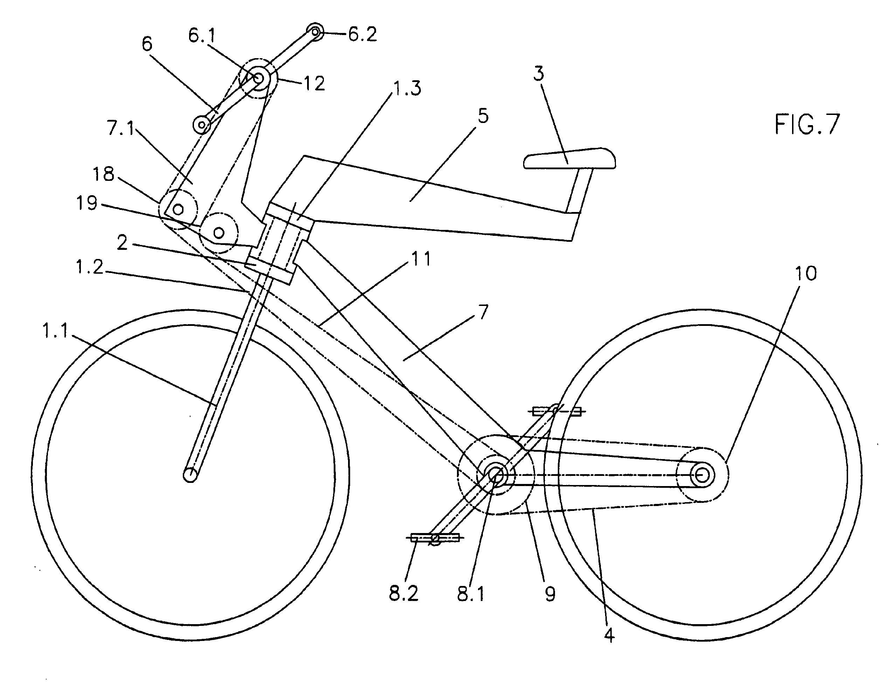

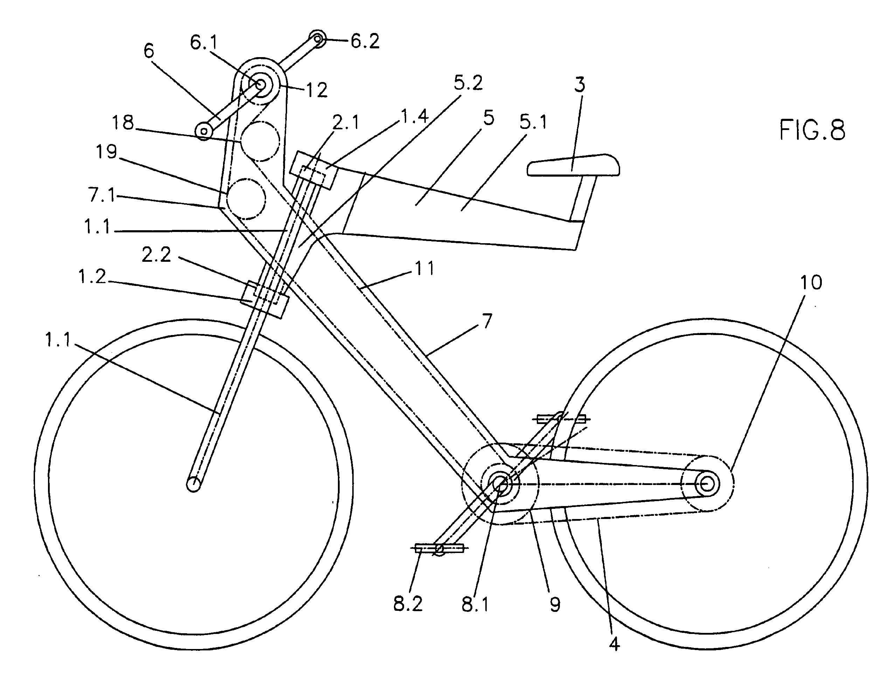

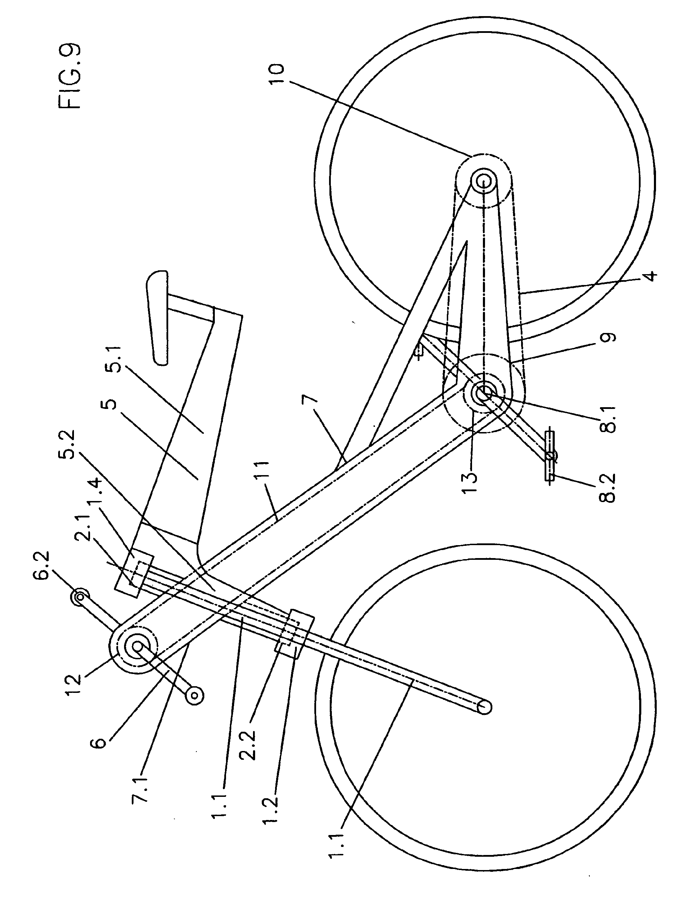

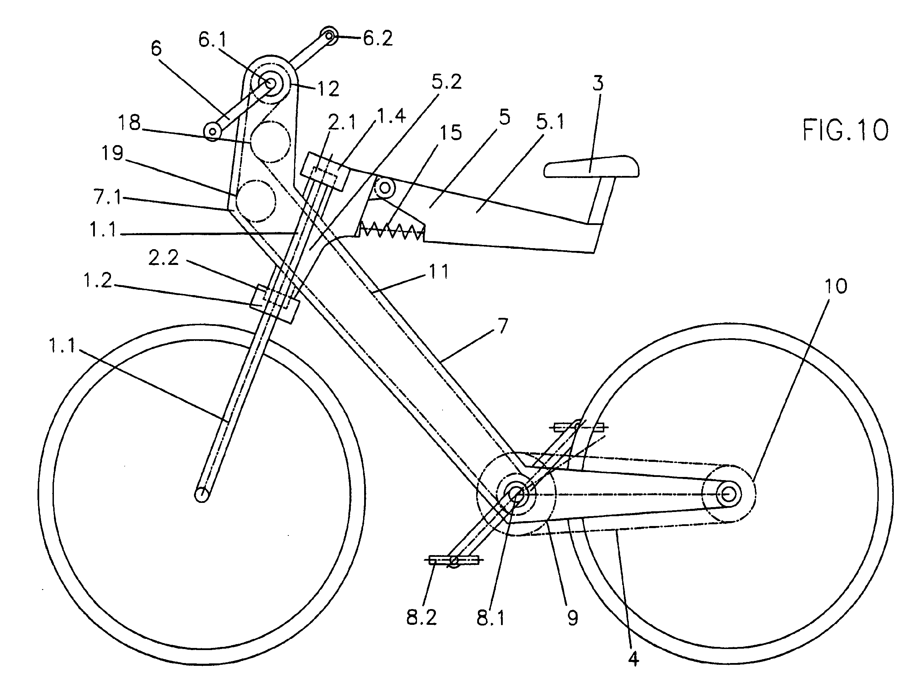

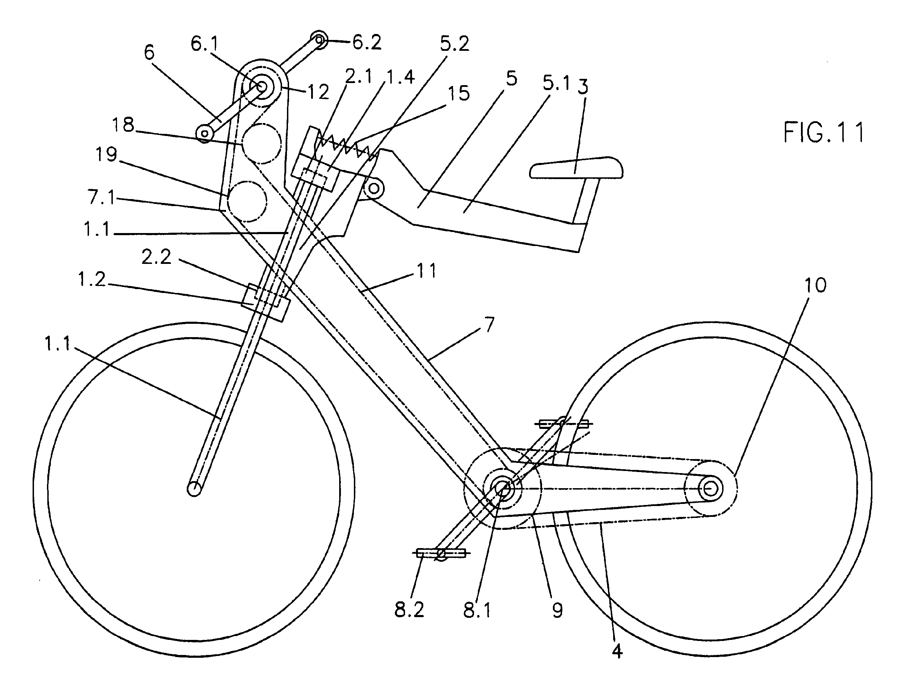

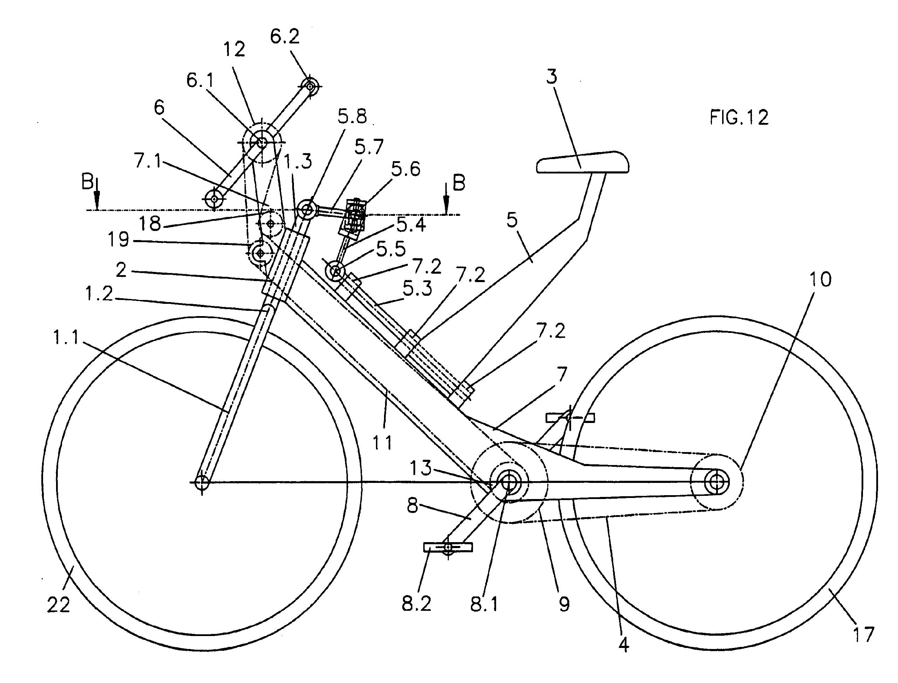

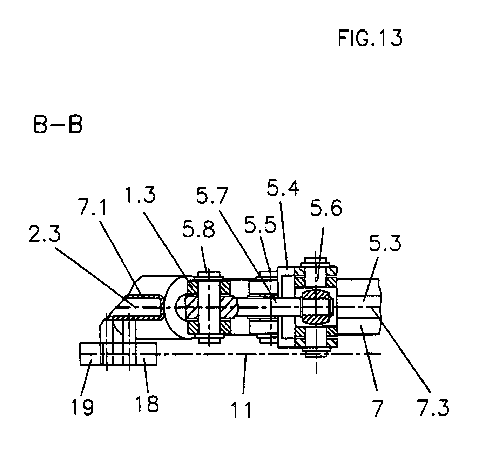

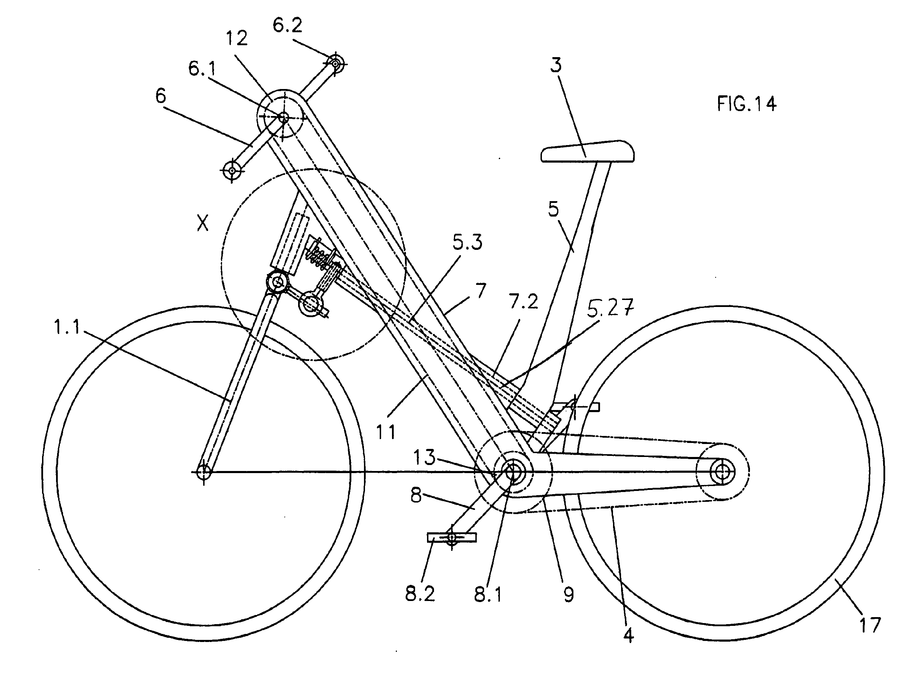

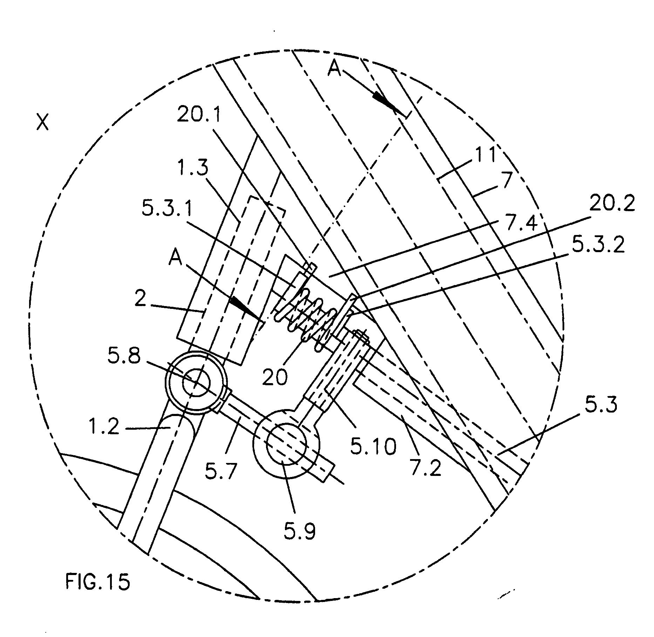

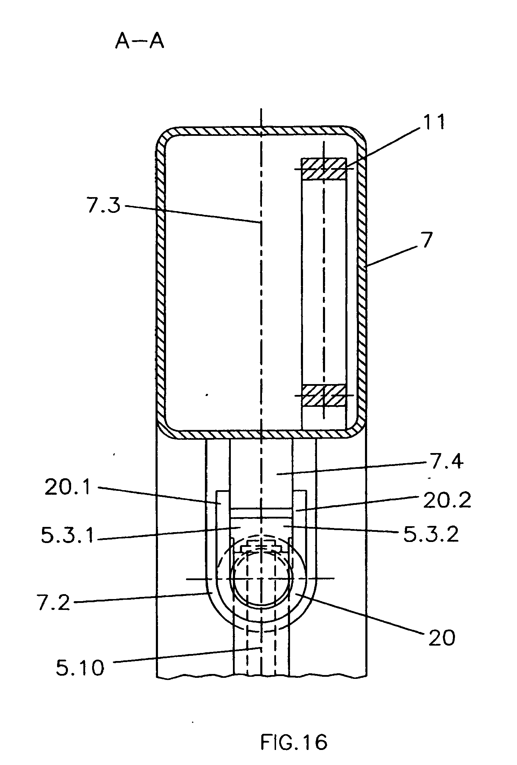

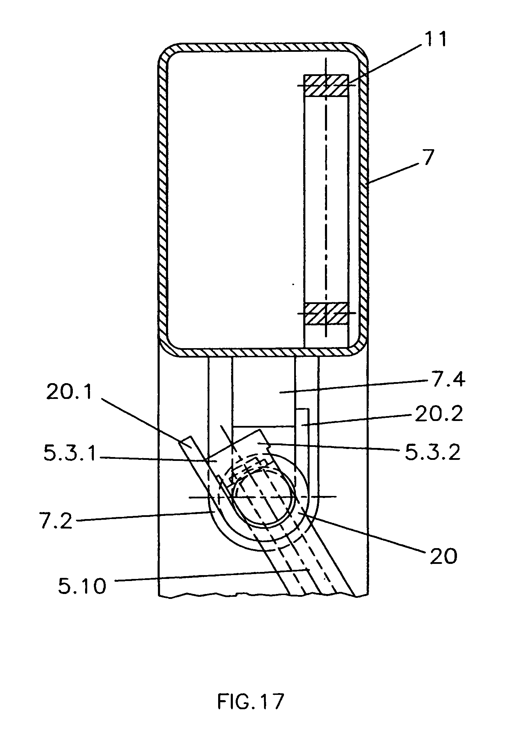

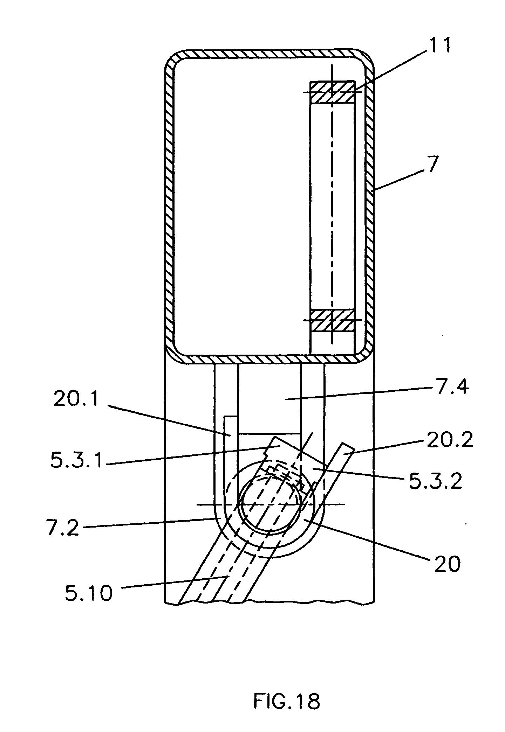

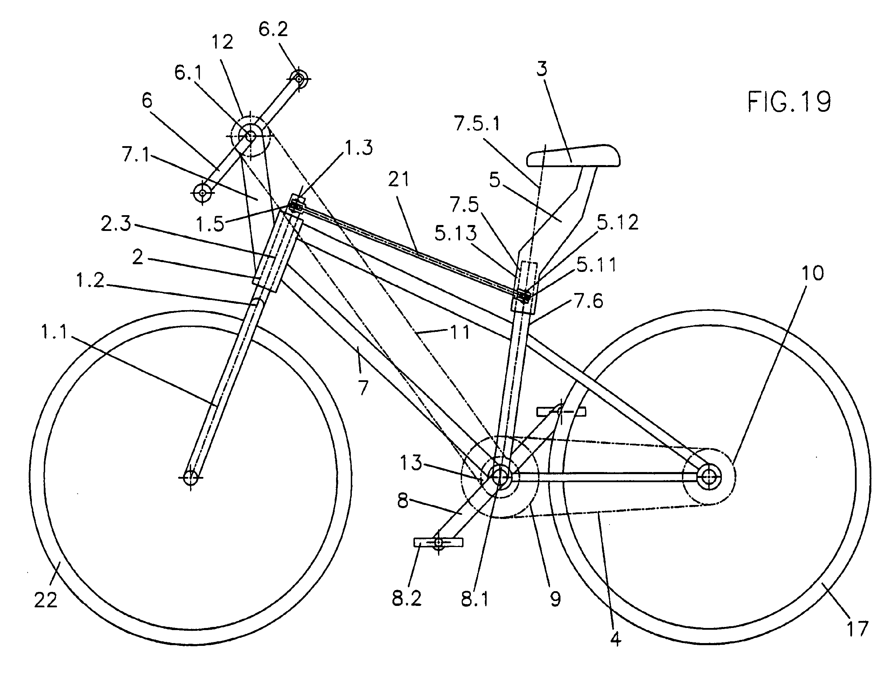

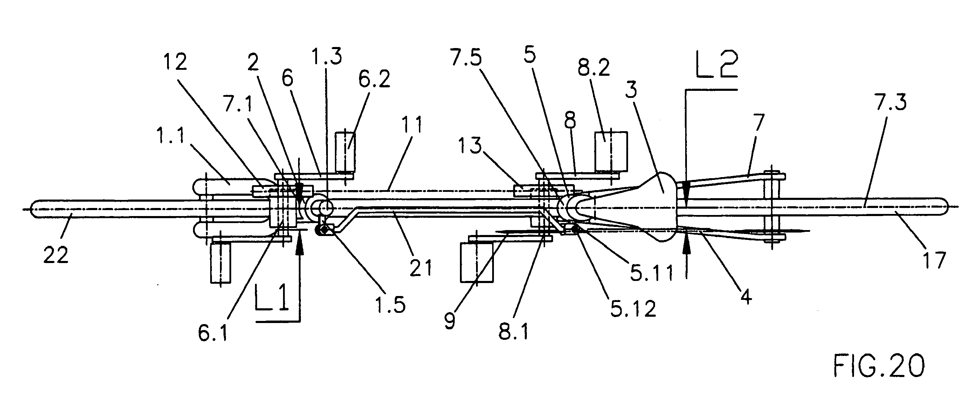

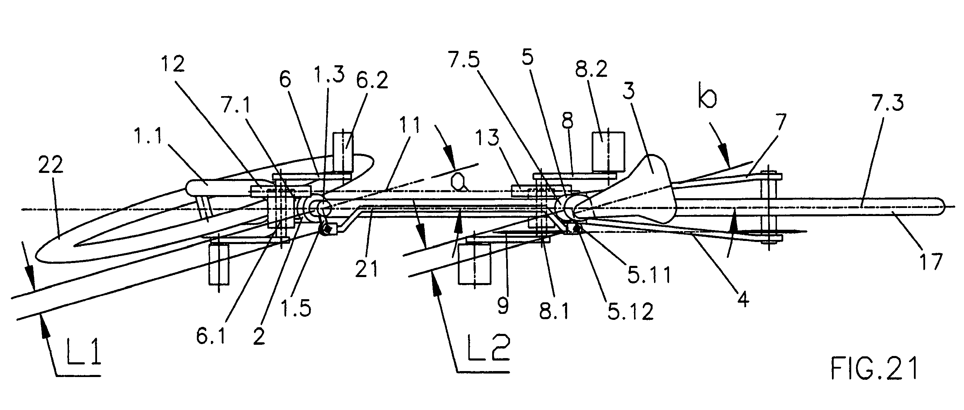

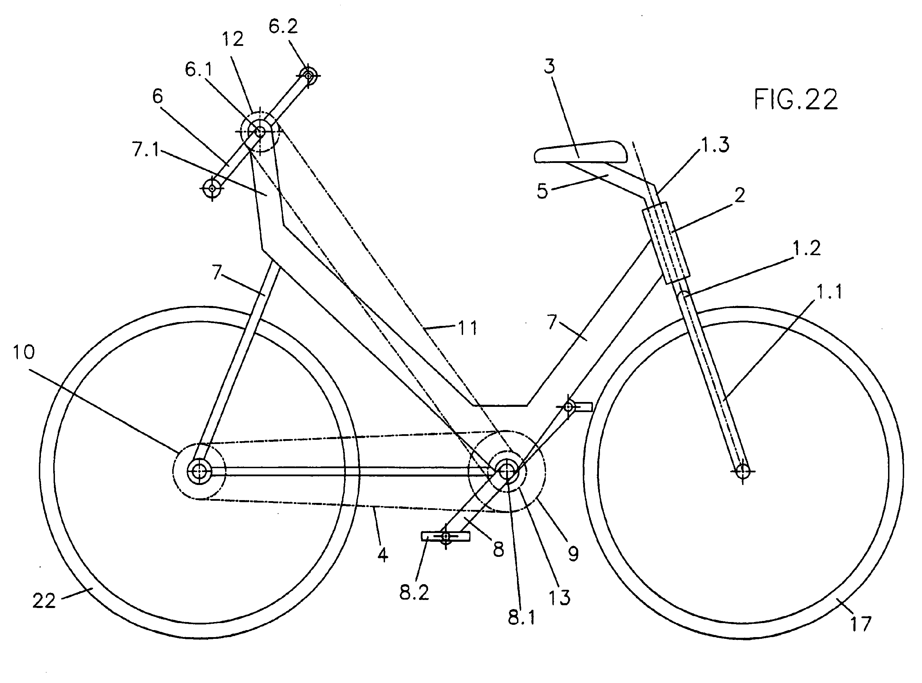

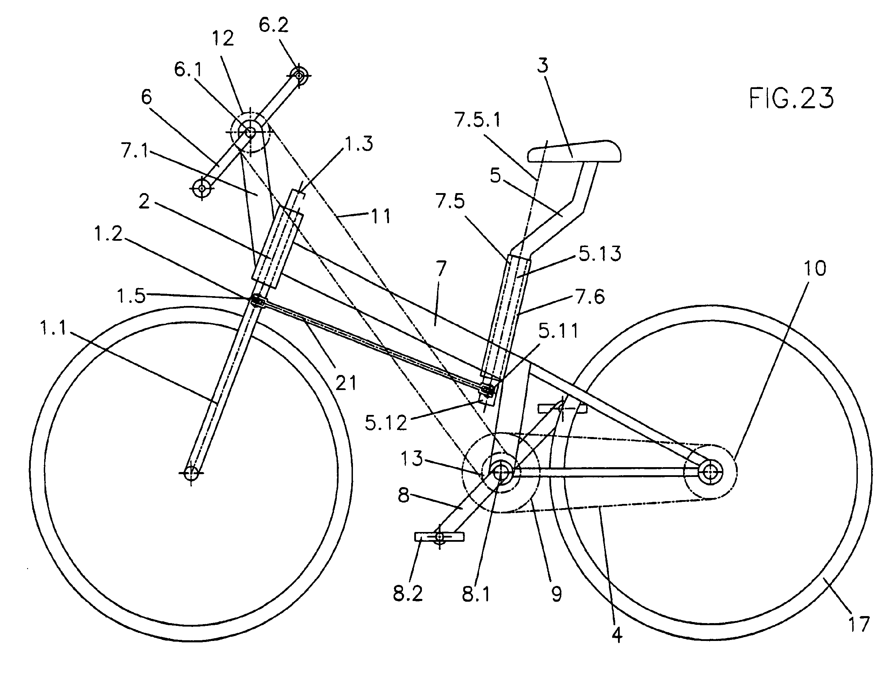

In der Variante A1a ist die Gabel 1 im Lenkkopflager 2 des Fahrradrahmens 7 drehbar gelagert (FIG.3). In ihr ist das Vorderrad 22 drehbar gelagert. Die Gabel 1 besteht aus den Gabelrohren 1.1, der Gabelbrücke 1.2 und des Gabellagerrohres 1.3. Der Sattel 3 ist fest im Lenkerarm 5 geklemmt, welcher fest mit dem Gabellagerrohr 1.3 verbunden ist. Am Lenkerarm 5 sind zwei Rollen 14 drehbar gelagert. Bei einer Drehbewegung des Lenkerarms 5 um das Gabellagerrohr 1.3 laufen die Rollen 14 auf den Laufschienen 16. Die Laufschienen 16 sind fest mit dem Fahrradrahmen 7 verbunden. Somit wird das Gewicht des Fahrers, der auf dem Sattel 3 sitzt, zum größten Teil über die Rollen 14 und die Laufschienen 16 am Fahrradrahmen 7 abgestützt. Der Lenkwinkel ist durch die Anschläge 16.1 an den Laufschienen begrenzt. Zum Schutz vor einem Einklemmen der Kleidung des Fahrers und um Schmutzablagerungen auf den Laufschienen 16 und Rollen 14 zu verhindern sind diese mit einem Faltenbalg umhüllt und geschützt (ohne Abbildung). FIG.4 und 5 zeigen die Draufsicht des Fahrrades. FIG.4 zeigt die Stellung der Gabel 1 und des Lenkerarms 5 beim Geradeauslauf. FIG.5 zeigt die Stellung der Gabel 1 bei einer Lenkbewegung nach links. Die Seitenangaben "links" und "rechts" bedeuten in allen geschilderten Varianten, die Seiten aus der Sicht des Fahrradfahrers der in Fahrtrichtung auf dem Fahrrad sitzt.
Der Fahrradrahmen 7 enthält eine Rahmenstück 7.1, indem die Handkurbeln 6 über eine Achse 6.1 drehbar gelagert sind. Auf den Handkurben 6 sind die Handkurbelgriffe 6.2 drehbar gelagert. Die Tretkurbeln 8 sind mit der Achse 8.1 verschraubt. Diese Achse 8.1 ist über das Tretlager drehbar im Fahrradrahmen 7 gelagert.
Zum Antrieb des Fahrrades bewegt der Fahrer mit seinen Händen die Handkurbeln 6 und mit seinen Füßen die Tretkurbeln 8. An den Kurbeln 6,8 sind Synchronscheiben 12,13 befestigt. Diese sind über einen Synchronriemen 11 miteinander verbunden. Somit ist ein synchroner Lauf der Kurbeln 6,8 gewährleistet. Der Synchronriemen 11 verläuft, aus Fahrersicht, links vom Fahrradrahmen 7. Auf der rechten Seite des Fahrradrahmens 7 verläuft die Antriebskette 4. Sie treibt über das Antriebskettenrad 9, welches fest mit der Tretkurbel 8 verbunden ist, und über das Antriebsritzel 10 das Hinterrad 17 an. Alternativ sind die Synchronscheiben 12,13 Kettenritzel und der Synchronriemen 11 ist eine Kette.

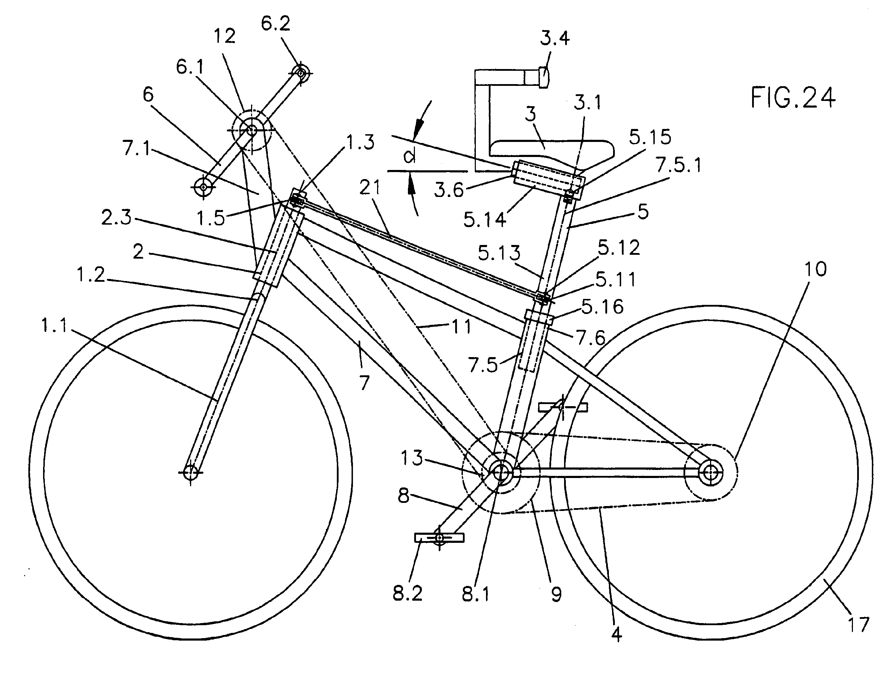

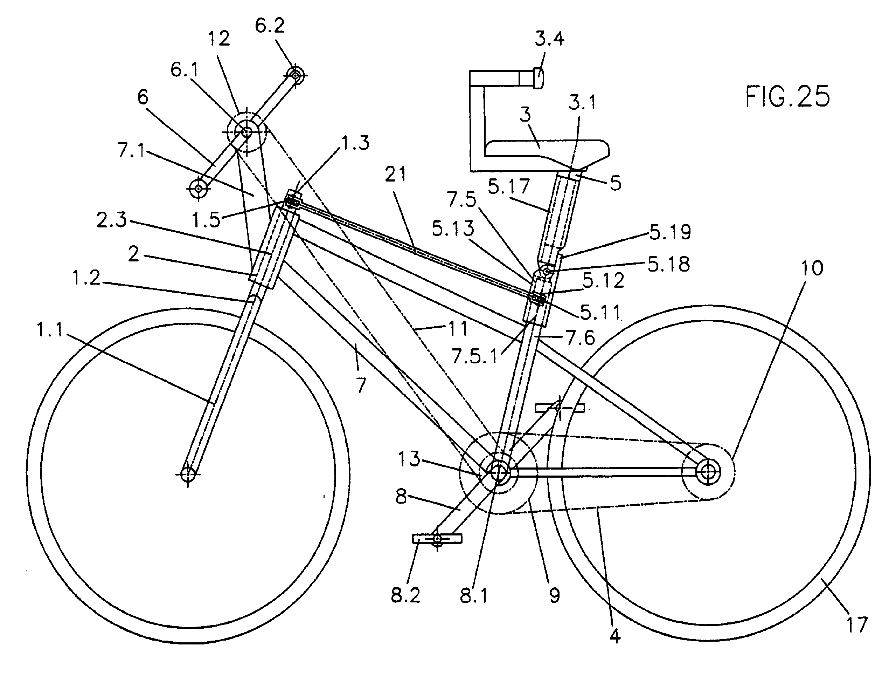

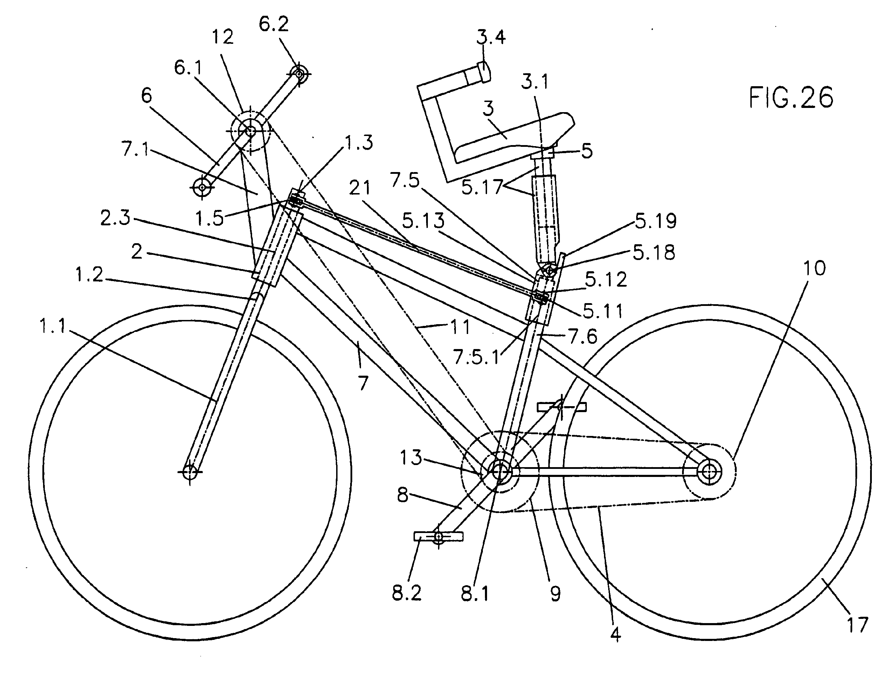

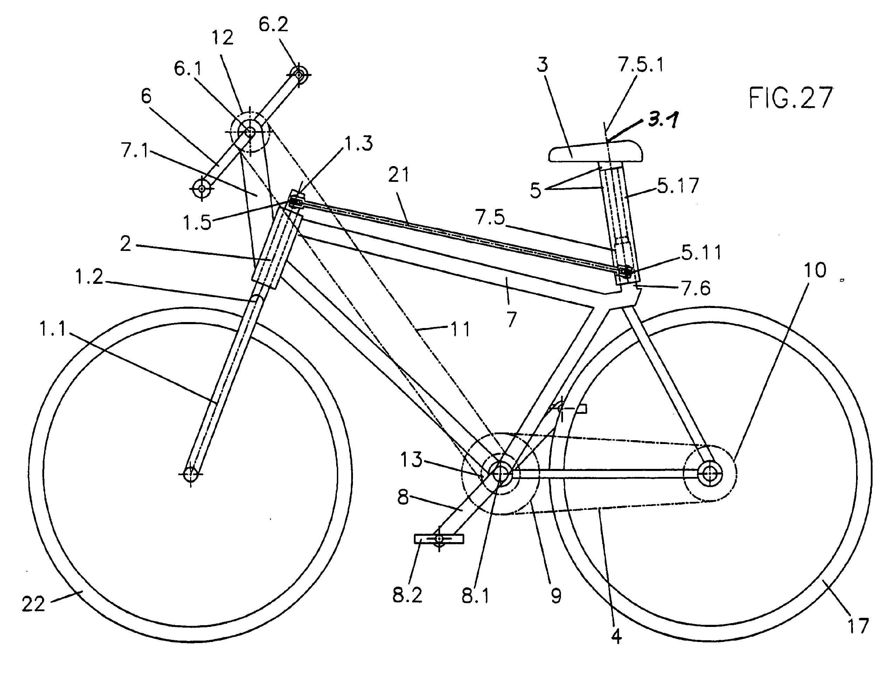

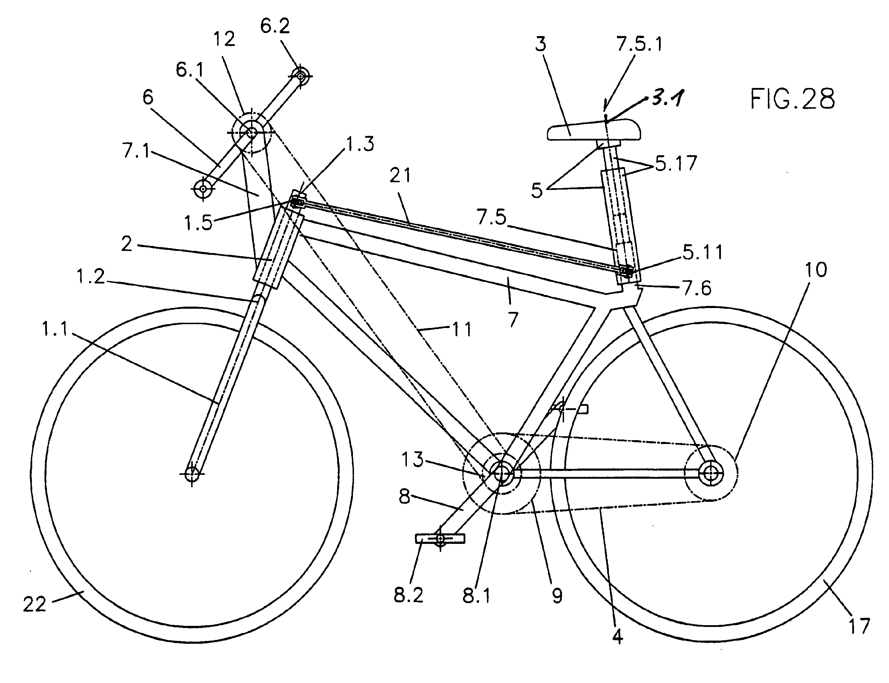

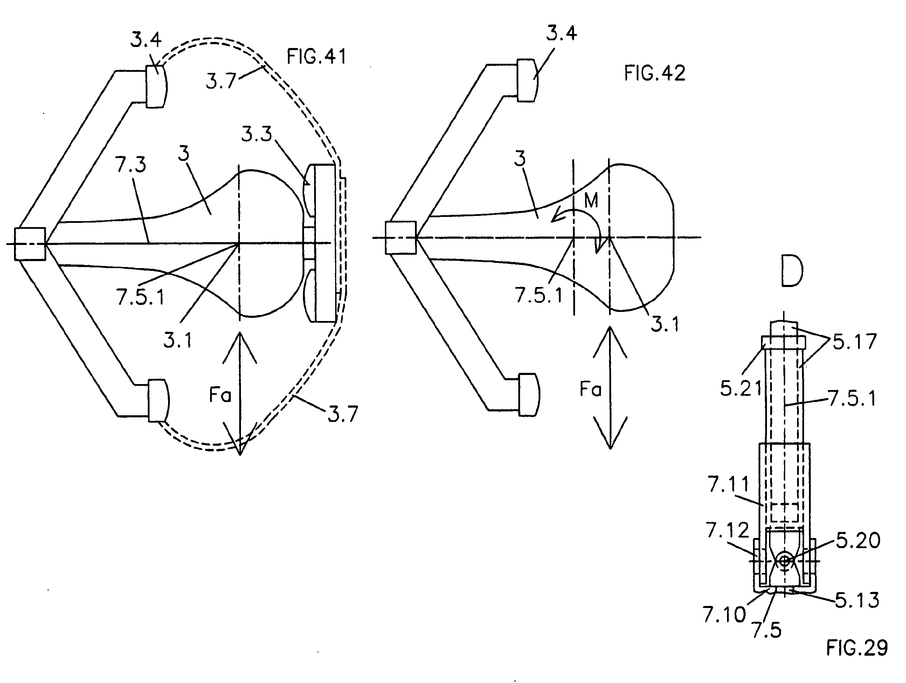

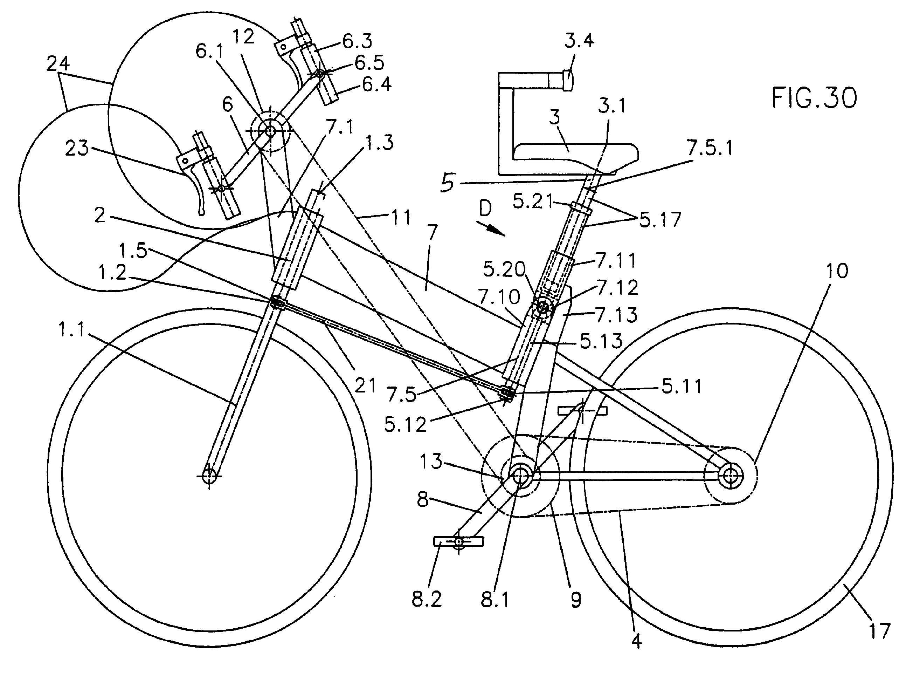

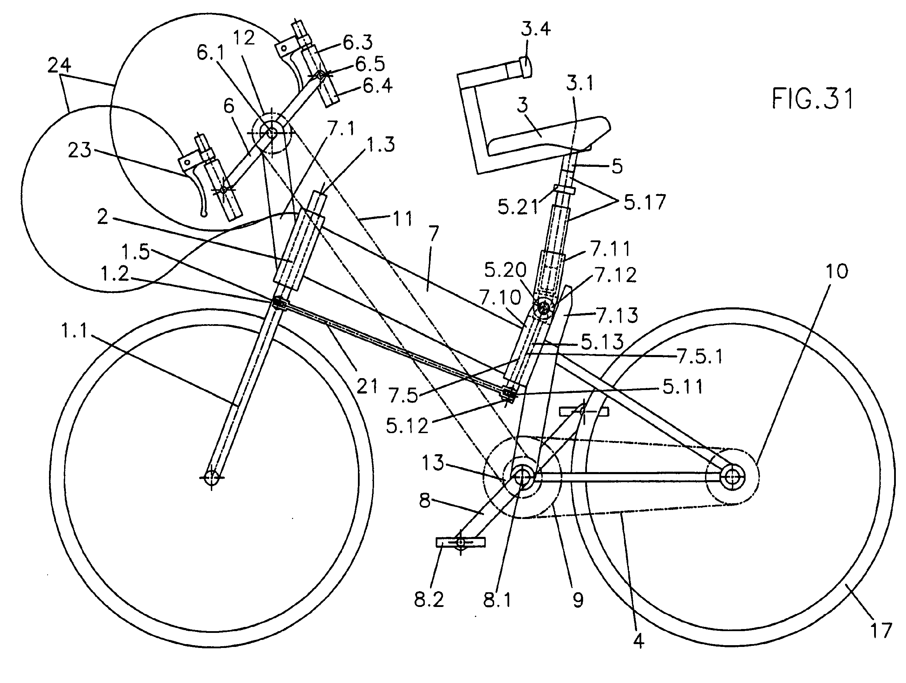

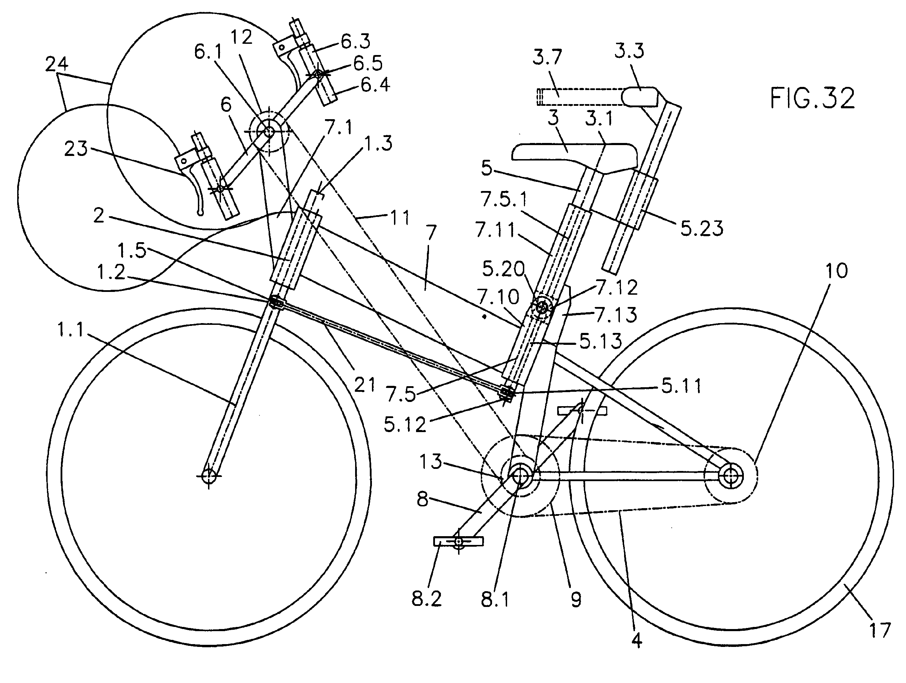

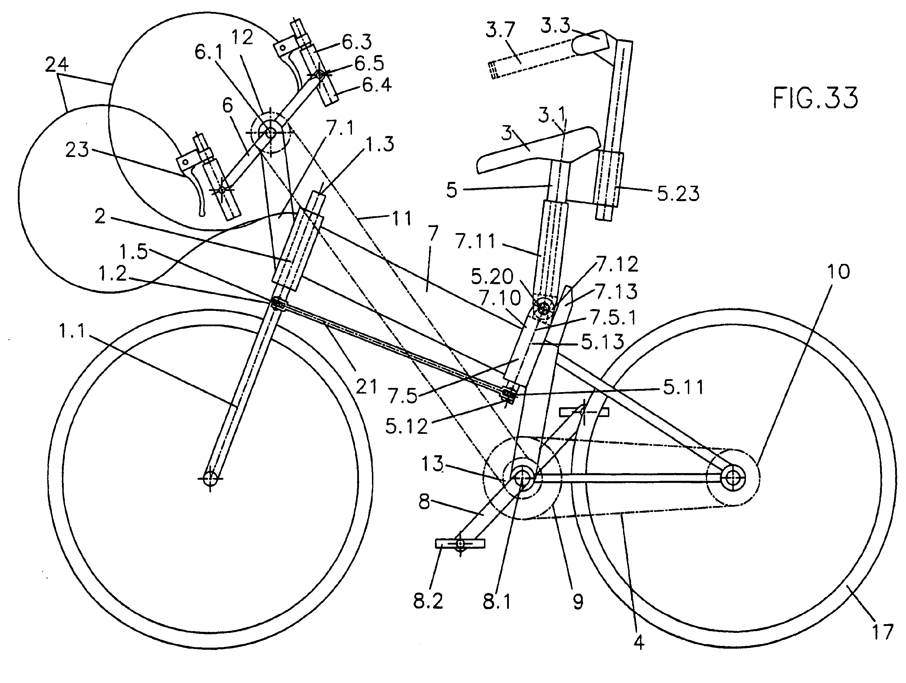

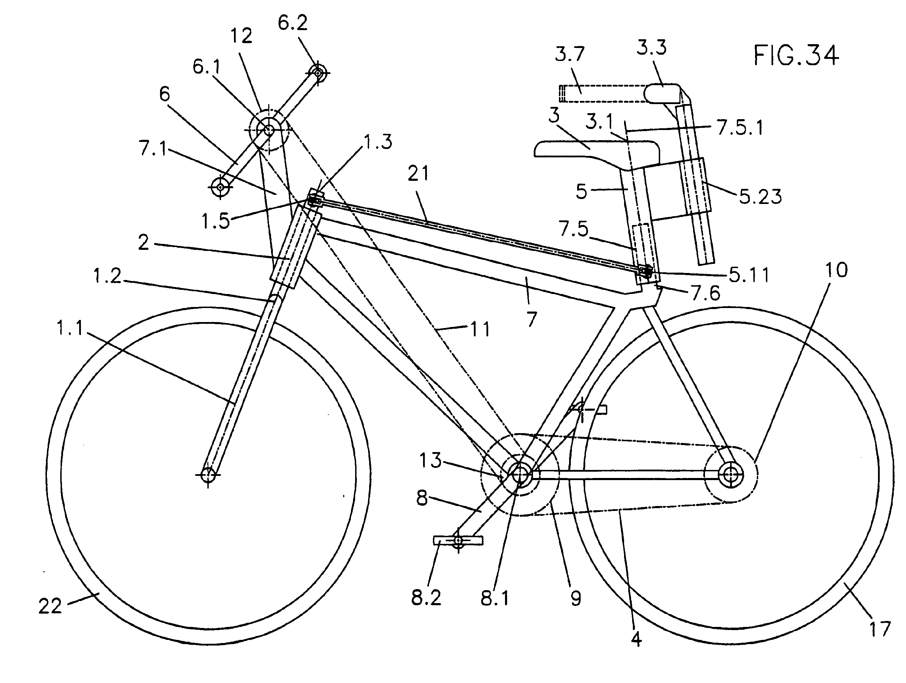

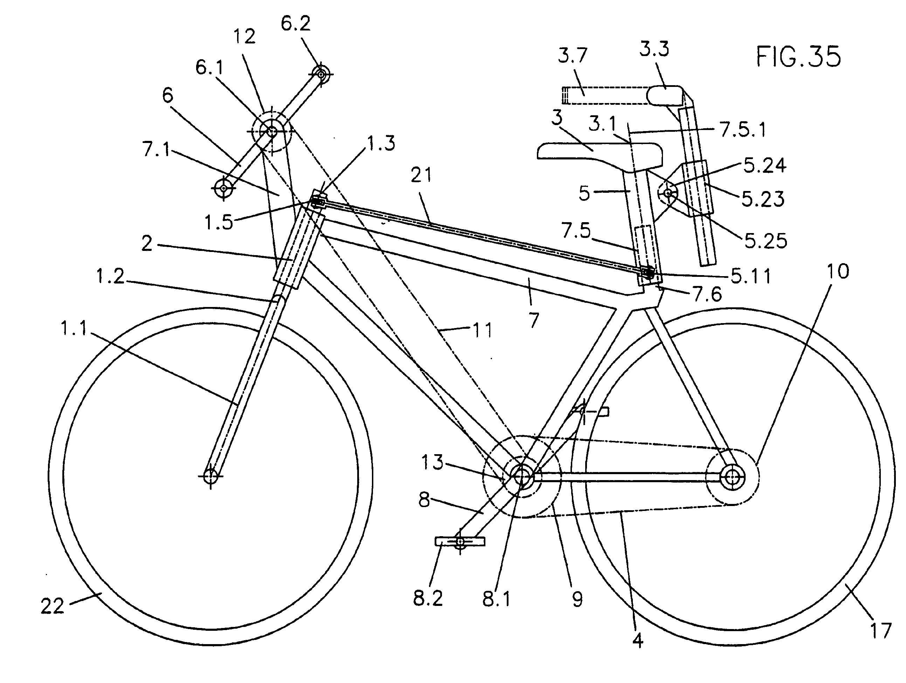

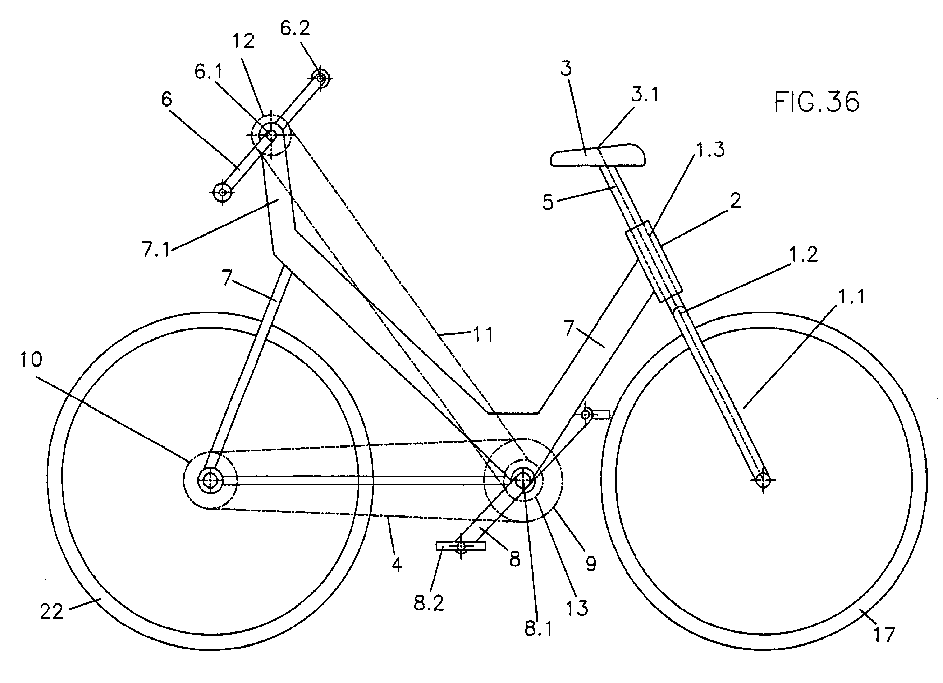

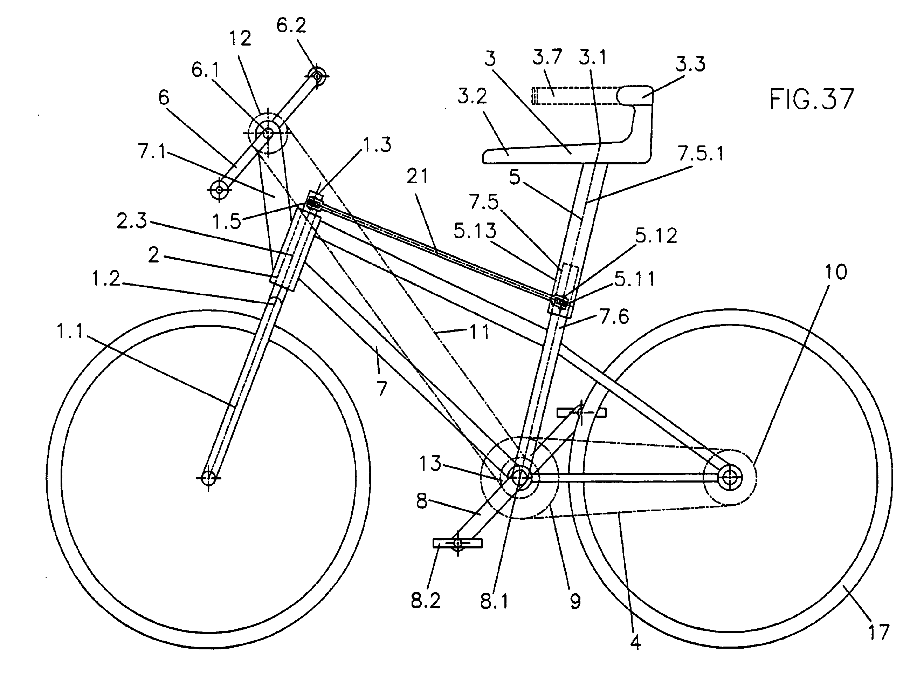

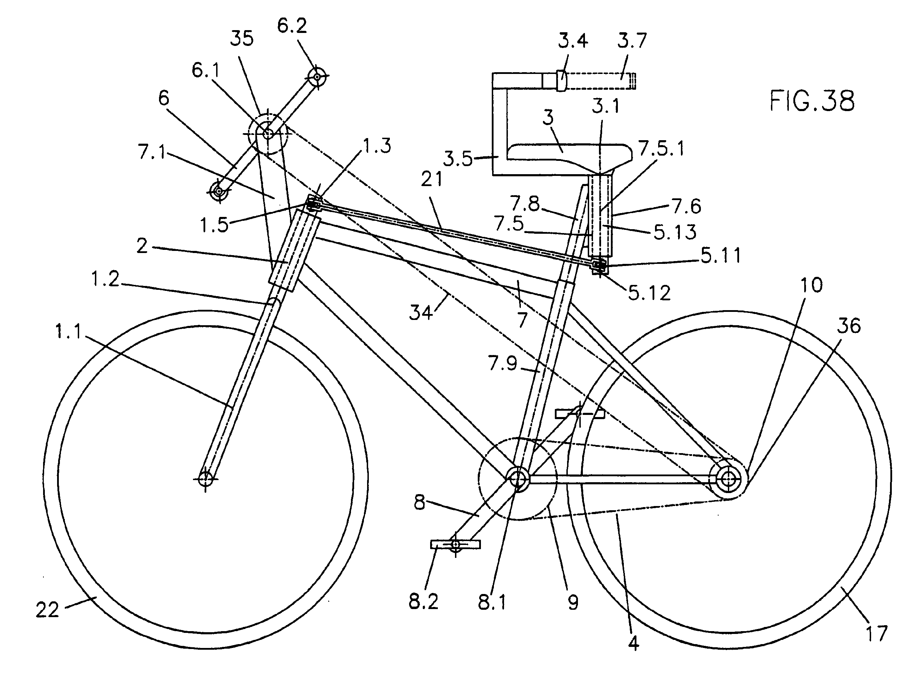

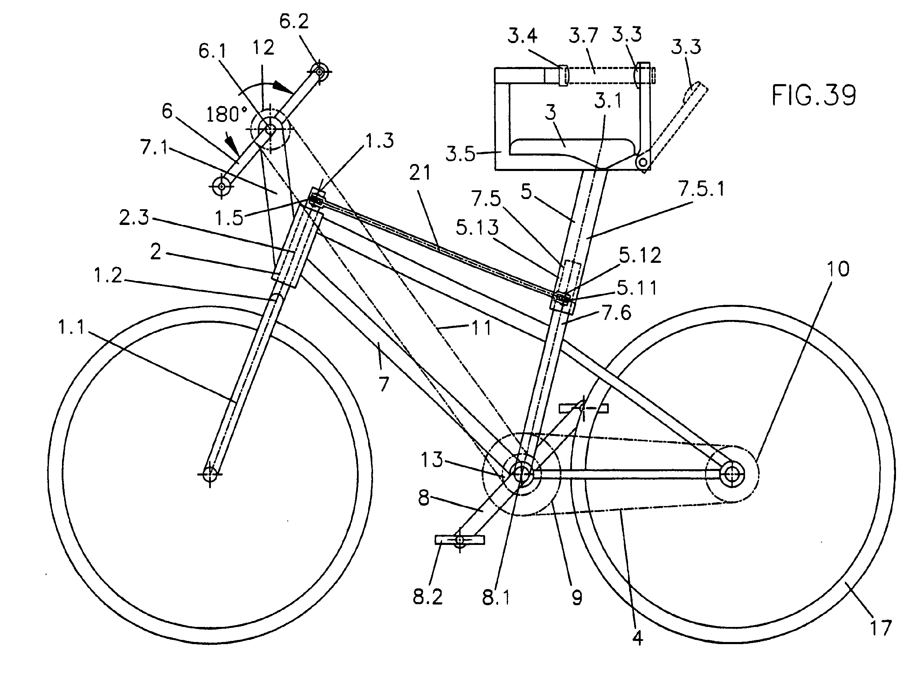

Bei der erfindungsgemäßen Variante B1, die kein Ausführungsbeispiel der Erfindung darstellt, sind die Handkurbelgriffe 6.2 waagrecht angeordnet (FIG.24).

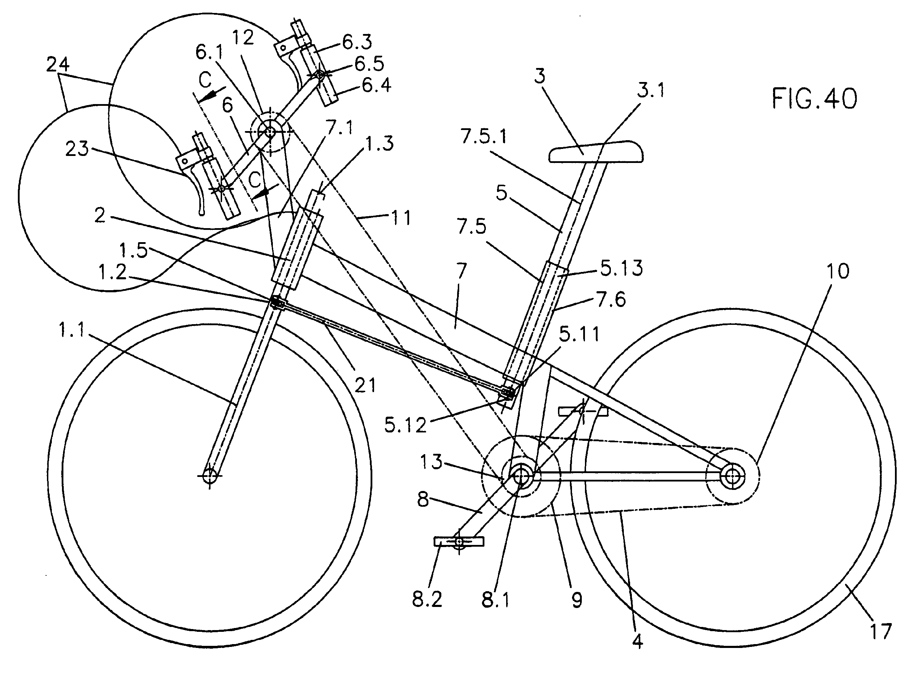

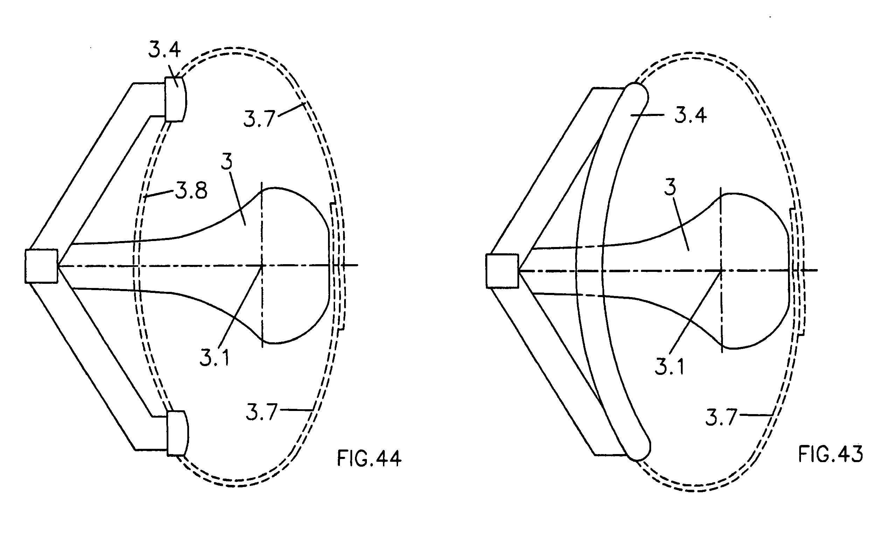

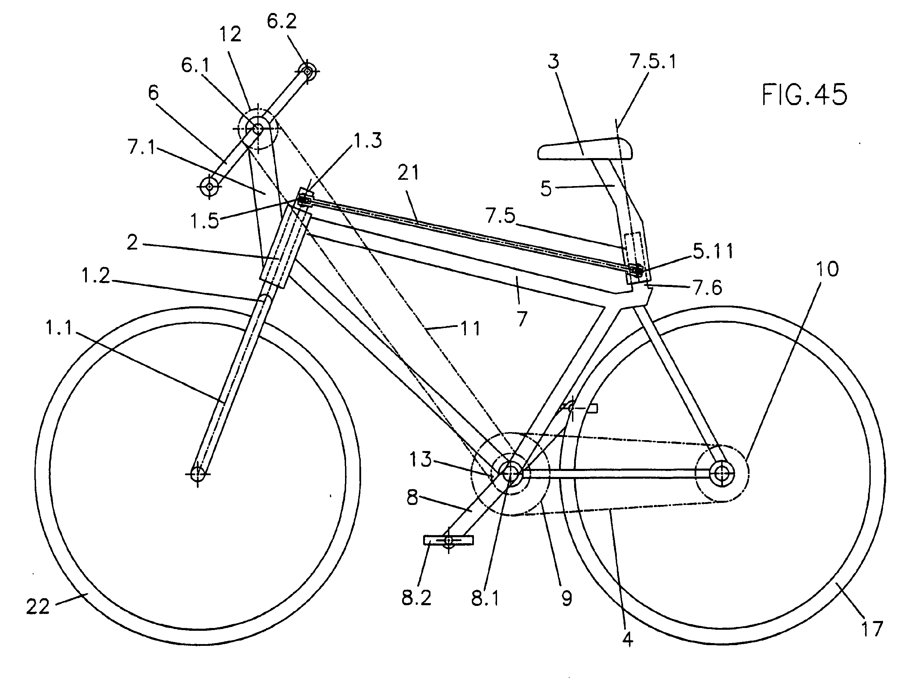

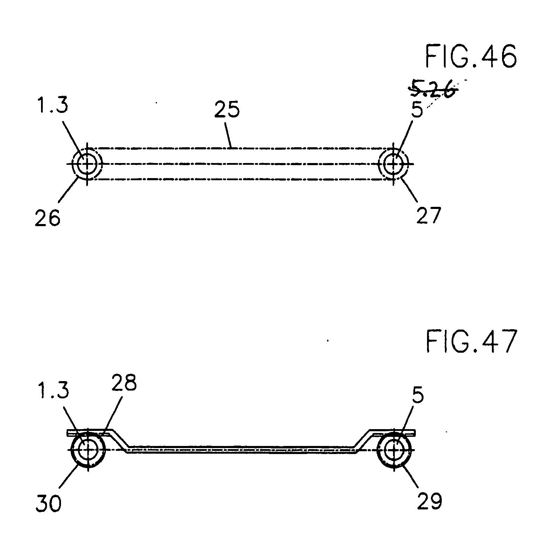

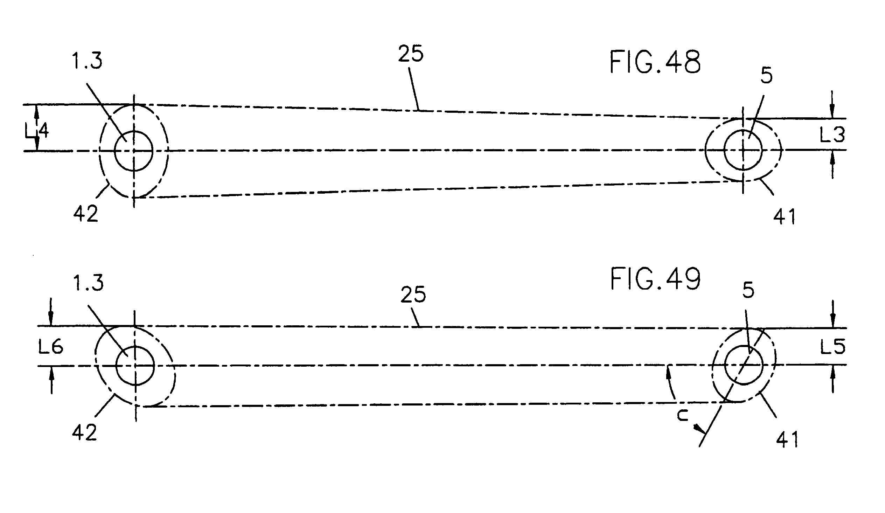

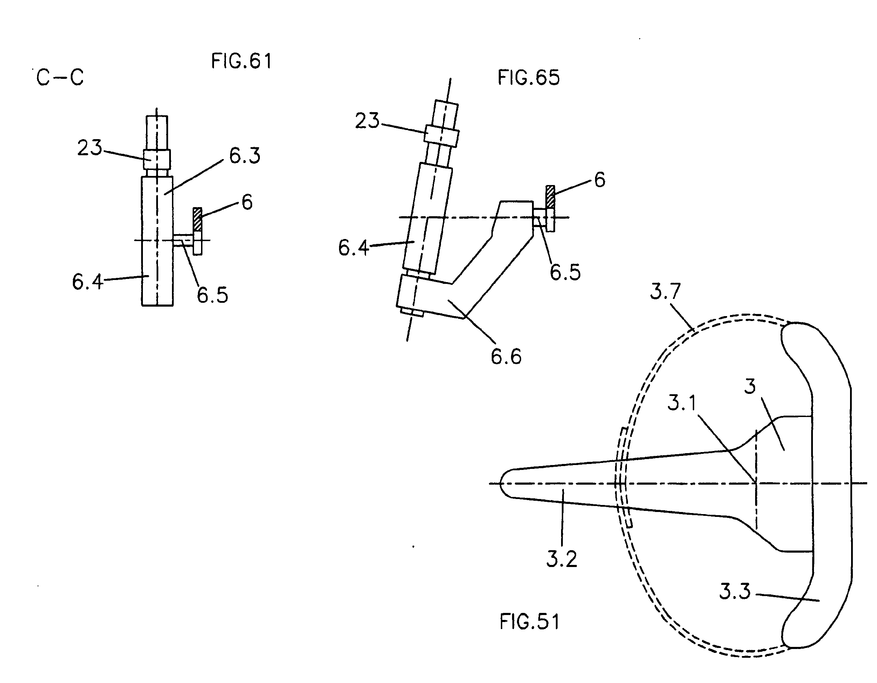

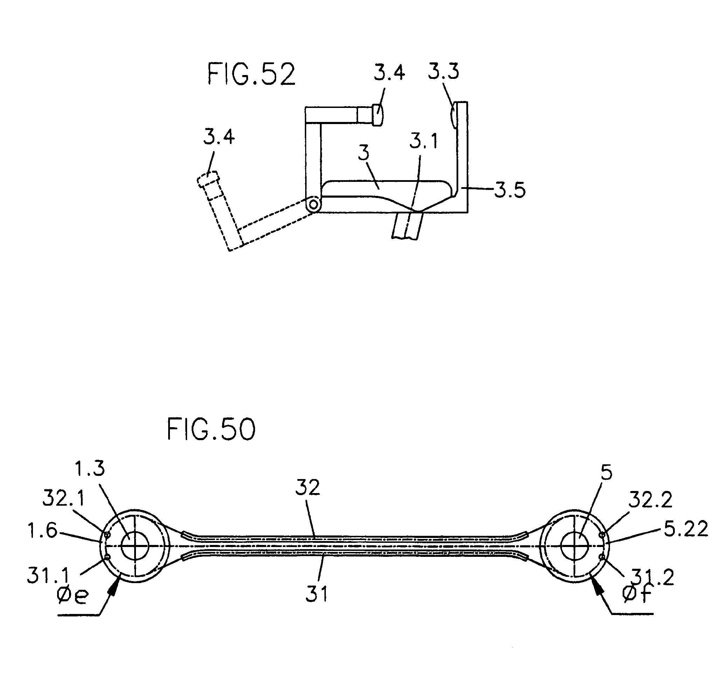

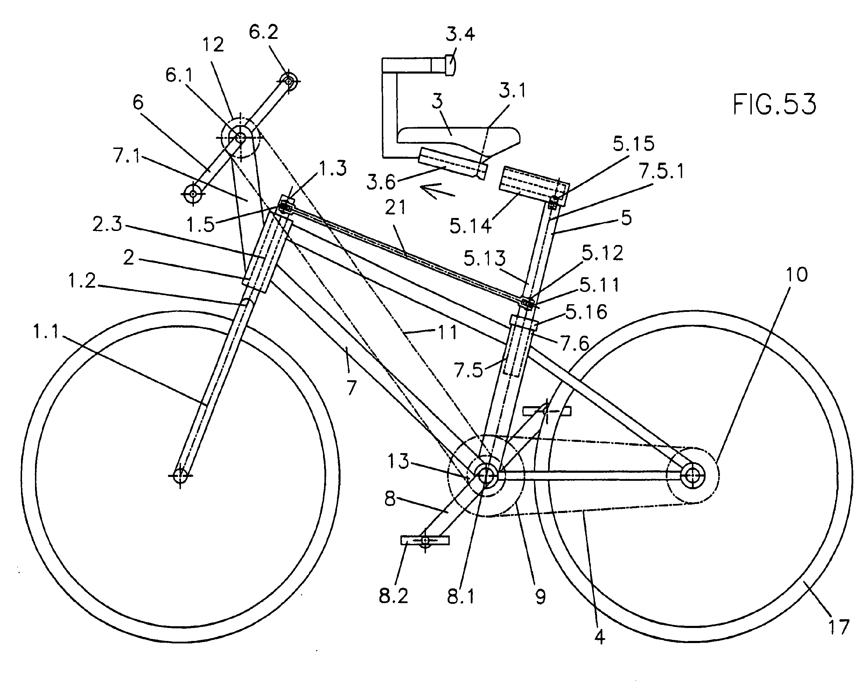

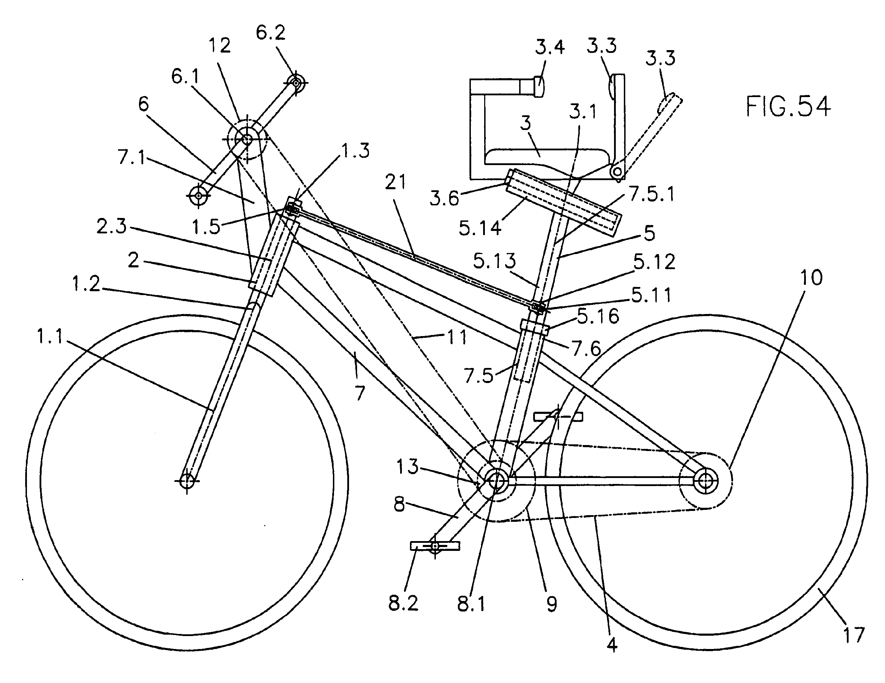

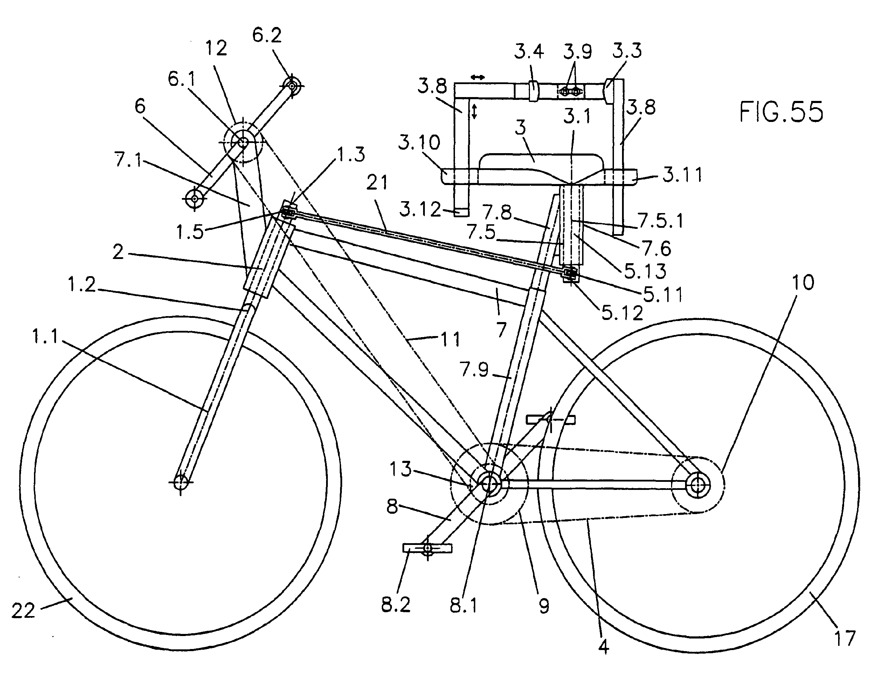

Bei der erfindungsgemäßen Variante B2, die kein Ausführungsbeispiel der Erfindung darstellt, sind die Handkurbelgriffe 6.3, anstatt waagrecht, gedreht angeordnet (Fig.40,61). Den Handkurbelgriff 6.3 umgibt ein Handgriff 6.4 aus Gummi. In der Mitte des Handgriffes 6.4 des Handkurbelgriffes 6.3 befindet sich die Drehachse 6.5. Die Drehachse 6.5 verbindet den Handkurbelgriff 6.3 mit der Handkurbel 6. Um diese Drehachse 6.5 kann sich der Handkurbelgriff 6.3 drehen.
FIG.65 zeigt die gleiche Perspektive wie FIG.61, jedoch eine andere erfindungsgemäße Variante eines Handkurbelgriffes 6.6. Bei dieser Variante B3 reicht die Drehachse 6.5 nicht bis in den Handgriff 6.4 hinein. Dies hat den Vorteil, dass der Handgriff 6.4, auf seiner ganzen Länge, frei von der Hand umfasst werden kann.

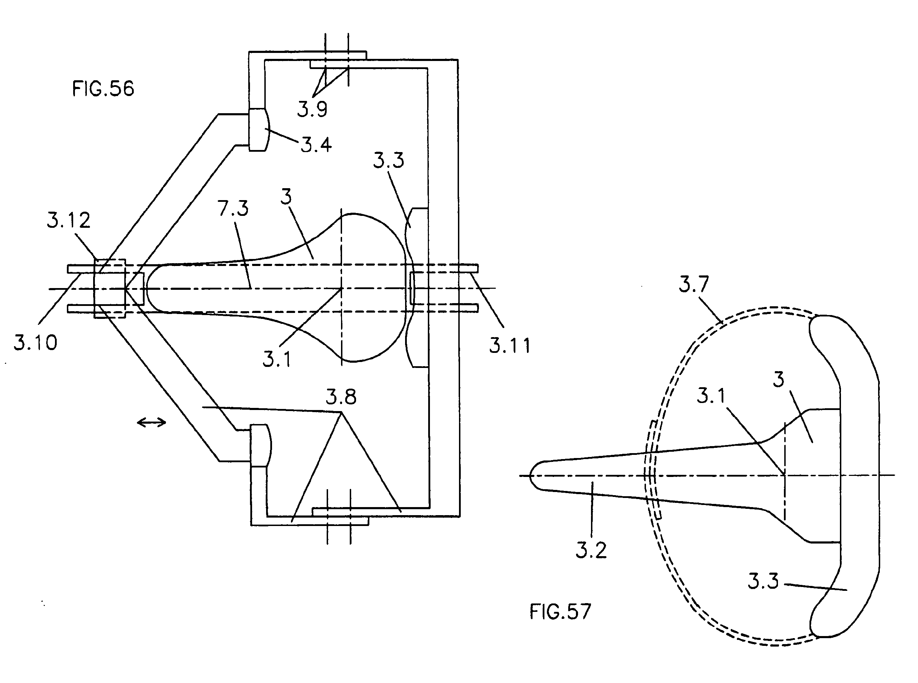

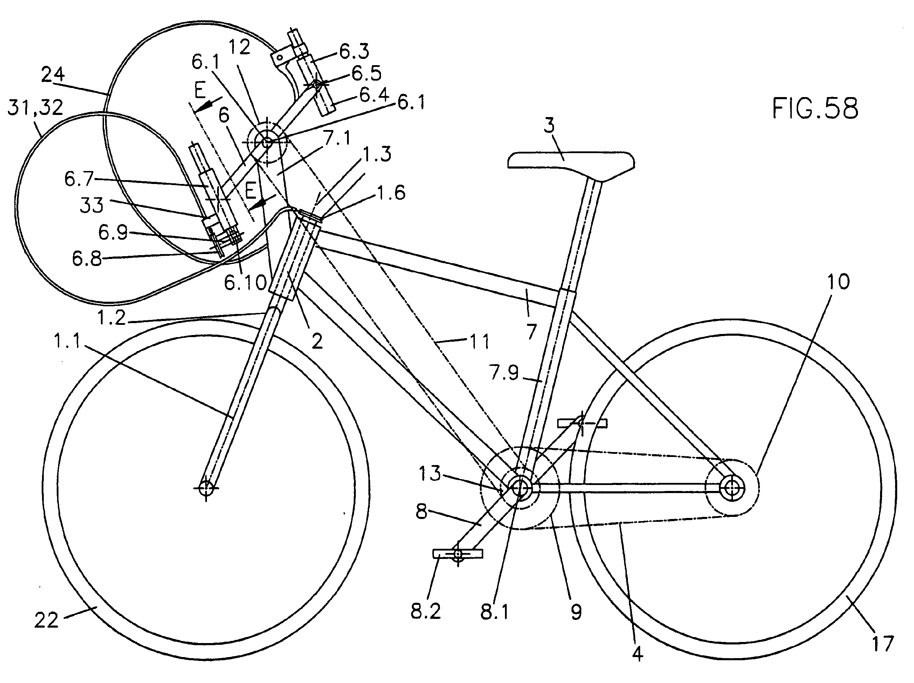

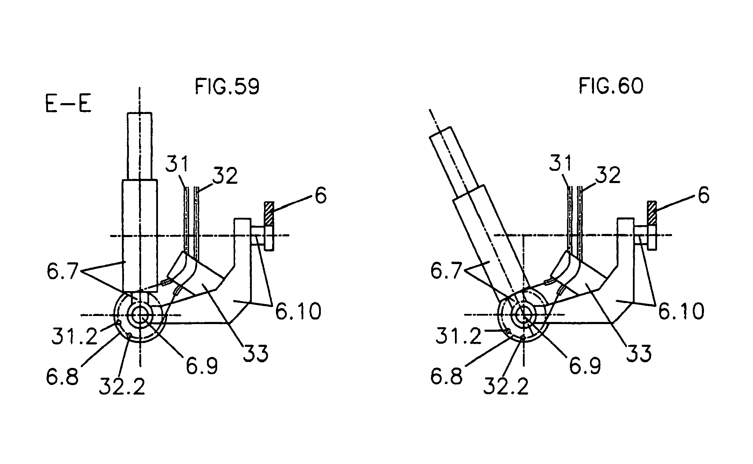

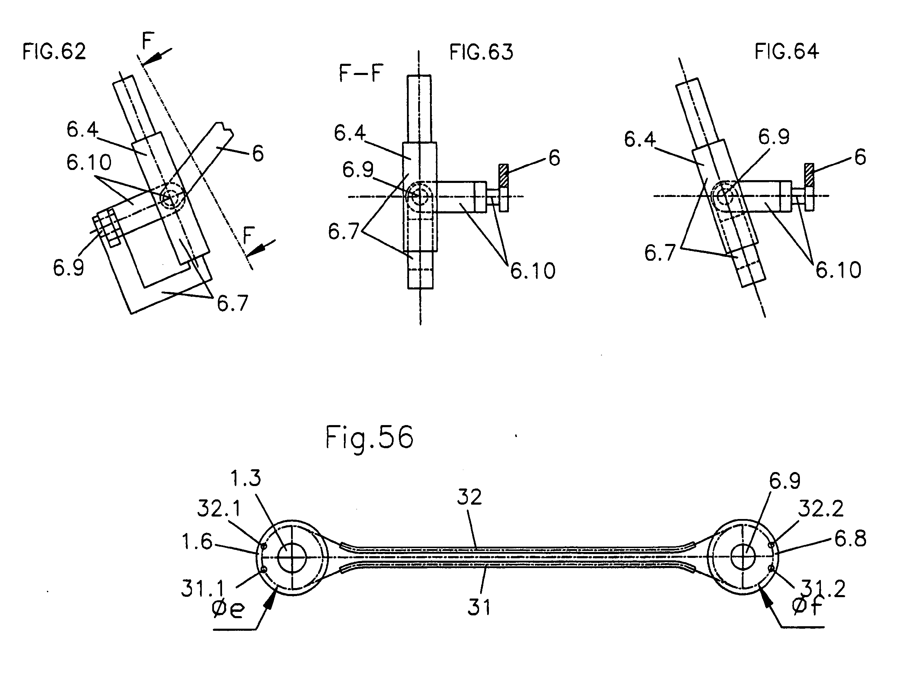

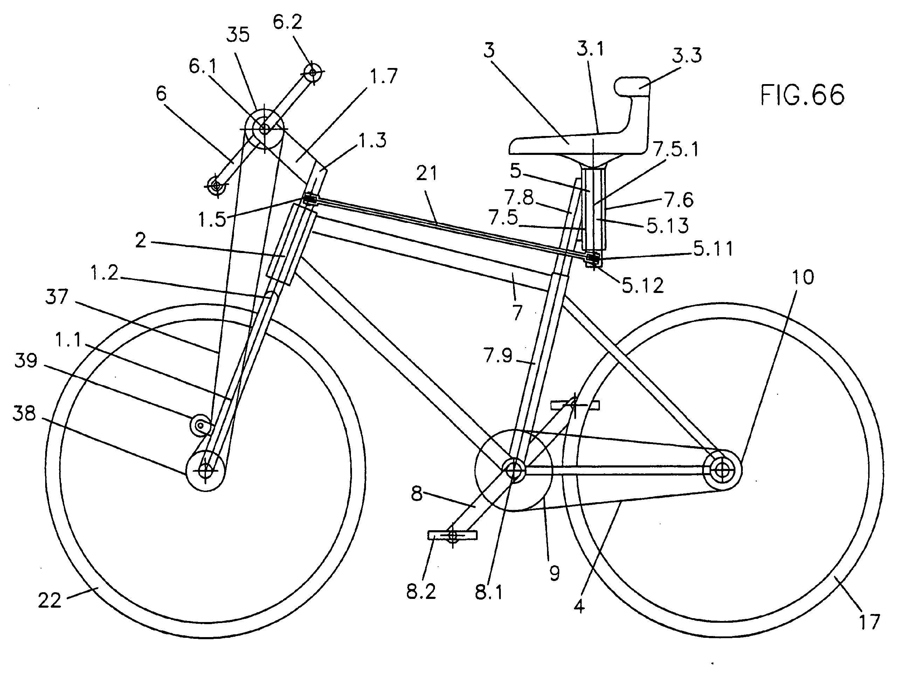

Bei der erfindungsgemäßen Variante C1, die kein Ausführungsbeispiel der Erfindung darstellt, sind, wie in den Varianten A, die Handkurbeln 6 über die Achse 6.1 im Rahmenstück 7.1 des Rahmens 7 gelagert (FIG.58). Auch die Übertragung der Armkräfte von der Handkurbel 6 auf die Tretkurbel 8 und von dort auf das Hinterrad 17 funktioniert gleich. Die Lenkung dieser Variante unterscheidet sich jedoch von den anderen Varianten. Der Sattel 3 ist über eine Klemmung fest mit dem Rahmen 7 verbunden und dient nicht zur Lenkung des Fahrrades. Gelenkt wird das Fahrrad über einen der beiden Handkurbelgriffe 6.7 (FIG.58,59). Dieser lenkende Handkurbelgriff 6.7 ist über die Achse 6.9 mit der Achse 6.10 verbunden. Der Handkurbelgriff 6.7 ist fest mit der Achse 6.9 verbunden, die in dem Lagerauge der Achse 6.10 schwenkbar gelagert ist. Die Achse 6.10 ist drehbar in der Handkurbel 6 gelagert. FIG.60 zeigt den gleichen Schnitt E-E der FIG.59, jedoch mit nach links geschwenkten Handkurbelgriff 6.7. An der Achse 6.9 ist die Umlenkrolle 6.8 der Bowdenzüge 31,32 fest angebracht. Die Bowdenzüge 31,32 werden vom Bowdenzughalter 33 gehalten. Der Bowdenzughalter 33 ist fest mit der Achse 6.10 verbunden und hält das eine Ende der Bowdenzughüllen. Das andere Ende der Bowdenzughüllen ist am Rahmenstück 7.1 befestigt. Fig. 56 zeigt die schematische Darstellung der Bowdenzüge 31,32 die von der Umlenkrolle 6.8 zur Umlenkrolle 1.6 führen, die am Gabellagerrohr 1.3 der Gabel 1 befestigt ist. Bei einer besonders betriebsicheren Alternative der Variante C1 ist jeder der beiden Bowdenzüge 31.32 doppelt vorhanden und die Umlenkrollen besitzen je eine zweite Seilnut für die doppelt vorhandenen Bowdenzüge. Sollte ein Bowdenzug reißen, dann kann mit dem entspechenden doppelt vorhanden Bowdenzug weitergelenkt werden. Bei einer Schwenkbewegung des Handkurbelgriffes 6.7 nach links schwenkt die Gabel 1 nach links, bei einer Schwenkbewegung des Handkurbelgriffes 6.7 nach rechts schwenkt die Gabel nach rechts. Der zweite Handkurbelgriff 6.3 dient nicht zur Lenkung und ist wie in FIG.40,61 ausgestalltet.
Alternativ ist auch der zweite Handkurbelgriff wie in FIG.59 ausgestalltet, jedoch spiegelsymetrisch für die andere Seite, und dient auch zur Lenkung. Dies erhöht die Betriebssicherheit. Sollte ein Bowdenzug eines Handkurbelgriffes reißen, dann kann mit dem zweiten Handkurbelgriff weitergelenkt werden.
FIG.62 zeigt die gleiche Perspektive wie FIG.58, jedoch eine andere erfindungsgemäße Variante des lenkenden Handkurbelgriffes 6.7. FIG.63 zeigt den Schnitt F-F. Der Handkurbelgriff 6.7 ist über die Achse 6.9 mit der Achse 6.10 verbunden. Der Handkurbelgriff 6.7 ist um die Mittelachse der Achse 6.9 schwenkbar. FIG.64 zeigt den geschwenkten Handkurbelgriff 6.7.
Diese Schwenkbewegung dient zum Lenken. Die Achse 6.10 ist drehbar in der Handkurbel 6 gelagert. Die Umlenkrolle 6.8, die Bowdenzüge 31,32 und der Bowdenzughalter 33 sind nicht dargestellt. Die Umlenkrolle ist an der Achse 6.9 befestigt, welche fest mit dem Handkurbelgriff 6.7 verbunden ist.
Die Bowdenzüge werden vom Bowdenzughalter gehalten. Der Bowdenzughalter ist fest mit der Achse 6.10 verbunden und hält das eine Ende der Bowdenzughüllen. Diese Variante hat den Vorteil, dass die Schwenkachse der Achse 6.9, um die der Handkurbelgriff 6.7 geschwenkt wird, durch die Mitte des Handgriffes 6.4 verläuft. Dadurch dreht sich beim Lenken die lenkende Hand um ihre eigene Mittelachse, welche beim Umgreifen des Handgriffes 6.4 auch gleichzeitig die Mittelachse des Unterarms ist.

In einer weiteren Variante C2, die kein Ausführungsbeispiel der Erfindung darstellt, eines lenkenden Handkurbelgriffes, hat der Handkurbelgriff die Form wie in Variante B3 (FIG.65). Allerdings kann über Ihn das Fahrrad gelenkt werden, indem der Fahrradfahrer den Handgriff 6.4 um seine eigene Achse dreht. Der Handgriff enspricht dem Gasdrehgriff eines Motorrades. Er ist, um seine eigene Achse drehbar, auf dem Handkurbelgriff 6.6 gelagert und betätigt, nach dem gleichen Prinzip wie die Variante C1, über Bowdenzüge die Fahrradlenkung.

Die erfindungsgemäße Variante D unterscheidet sich von den bisherigen Varianten in der Lenkung. In dieser Variante wird über ein Lenksystem mit Hilfe der "Steer by Wire"-Technologie gelenkt. "Steer by Wire"-Technologie wird in ähnlicher Weise in Automobilen verwendet. Bei dieser Variante ist das Steuerelement und der Stellmotor der Lenkung mechanisch entkoppelt. Die Lenkung wird von zwei elektrischen Motoren betätigt. Die Steuersignale werden rein elektrisch übertragen. Sensoren messen die Positionsänderung, die Betätigungskraft, oder die Beschleunigung, mit der der Fahrradfahrer das Steuerelement betätigt. Die Sensoren wandeln die gemessene Größen in elektrische Signale um. Die Signale werden direkt über Kabel oder über Funk an das Lenkunssteuergerät weitergeleitet. Das Lenkungssteuergerät besitzt einen Mikroprozessor der die Signale des Sensors verarbeitet und daraus den Soll-Lenkwinkel berechnet.
An der Gabel des Fahrrades befinden sich Sensoren die den Lenkwinkel messen und über Kabel oder über Funk an das Lenkunssteuergerät weitergeben. Der Mikroprozessor des Lenksteuergeräts verarbeitet diese Signale und berechnet daraus den Ist-Lenkeinschlag. Die Steuerung schaltet die elektrischen Motoren, je nach Abweichung vom Soll-Lenkwinkel zum Ist-Lenkwinkel, an oder ab. Weicht der Soll-Lenkwinkel vom Ist-Lenkwinkel ab, dann schaltet die Lenkungssteuerung die Motoren ein, bis der Ist-Lenkwinkel dem Soll-Lenkwinkel entspricht.
Die elektrischen Motoren treiben eine Verstelleinrichtung an. Diese Verstelleinrichtung besteht aus einer Spindel und einem Zahnrad. Die Motoren treiben diese Spindel an, die wiederum das Zahnrad antreiben, welches fest mit der Gabel des Fahrrades, also der Fahrradlenkung, verbunden ist. Die beiden Motoren der elektrischen Spindel sind jeweils zur Hälfte an der Erzeugung des Lenkmoments beteiligt. Bei einer Störung kann auch einer der Motoren die Lenkfunktion übernehmen, sodass dieses redundante System ein Maximum an Funktionssicherheit bietet. Auch die anderen Komponenten der elektronischen Lenkung sind aus Gründen der Sicherheit doppelt vorhanden. Die Energie für die Lenkungssteuerung, die Sensoren und die Motoren liefern zwei Batterien.
Der Vorteil der "Steer by Wire" Lenkung des Fahrrades ist, dass alle Antriebskräfte, die auf Fahrradlenkung wirken, durch die elektrisch betätigte Spindel aufgehoben werden. Grund dafür ist die Spindel, die über Selbsthemmung verfügt. Wird die Spindel durch die elektrischen Motoren angetrieben, dann dreht diese die Gabel des Fahrrades. Aufgrund der Selbsthemmung der Spindel, ist es jedoch nicht möglich durch Drehen der Gabel des Fahrrades die Spindel zu drehen. Die Fahrradlenkung dreht sich also nur durch die Spindel und ist so von anderen äußeren Kräften, insbesonder von Antriebskräften, entkoppelt. Ein weiterer Vorteil liegt in der elektrischen, beziehungsweise funktechnischen Übertragung des Lenkmanövers vom Steuerelement an die Lenkungssteuerung. Im Gegensatz zu einer mechanischen Lenkung ist diese Übertragungsmethode frei von Reibung. Außerem sind bei der Lenkungssteuerung die Kabel, zum Übertragen der Signale und zur Stromversorgung, einfach und platzsparend zu verlegen, im Gegensatz zur mechanischen Lenkung mit ihren platzraubenden Bowdenzügen und Lenkgestängen.

Die erfindungsgemäße Variante D2 enspricht der Variante D. Das in der Variante D genannte Steuerelement ist hier ein Joystick der am Handkurbelgriff 6.2,6.3 des Fahrrades befestigt ist. Die in der Variante D genannten Sensoren (ohne Abbildung) befinden sich hier im Joystick. Sie messen den Lenkwinkel des Joysticks. Indem der Fahrradfahrer mit seinem Daumen oder einem Finger den Joystick nach rechts oder links schwenkt, lenkt er mit Hilfe des in Variante D beschriebenen Lenkungssystems, das Fahrrad.

Die erfindungsgemäße Variante D3 enspricht der Variante D. Das in der Variante D genannte Steuerelement sind hier zwei Taster, die beide an einem Handkurbelgriff 6.2,6.3 des Fahrrades befestigt sind. Die in der Variante D genannten Sensoren (ohne Abbildung) befinden sich hier in den Tastern. Sie messen den Tastendruck. Ein Taster gibt der Lenkunssteuerung das Signal nach rechts zu lenken, der andere Taster gibt ihr das Signal nach links zu lenken. Indem der Fahrradfahrer mit seinem Daumen oder einem Finger den einen oder den anderen Taster drückt, lenkt er mit Hilfe des in Variante D beschriebenen Lenkungssystems, das Fahrrad.
Alternativ ist der Taster für das Signal "nach rechts lenken" auf dem rechten Handkurbelgriff 6.2,6.3 und der Taster für das Signal "nach links lenken" auf dem linken Handkurbelgriff 6.2,6.3

Die erfindungsgemäße Variante D4 entspricht der Variante D. Das in der Variante D genannte Steuerelement ist hier der Handkurbelgriff 6.7 des Fahrrades. Die in der Variante D genannten Sensoren (ohne Abbildung) sind hier zwischen dem Handkurbelgriff 6.7 und der Achse 6.10 angebracht (FIG.62,63,64). Sie messen den Lenkwinkel des Handkurbelgriffes 6.7.
Indem der Fahrradfahrer den Handkurbelgriff 6.7 dreht, lenkt er mit Hilfe des in Variante D beschriebenen Lenkungssystems, das Fahrrad.

Als Alternative für alle varianten verfügt das Fahrrad zusätzlich über einen elektrischen Hilfsmotor. Solche Hilfsmotoren sind bekannt. Sie befinden sich üblicherweise in der Antriebsnabe des Hinterrades. Alternativ befindet sich der Motor, samt dem dazugehörigen Akku, im Sitzrohr des Fahrrades. Dann verbinden Zahnräder den Motor mit der Tretkurbel. Über diese Zahnräder überträgt der Motor sein Drehmoment an die Tretkurbel. Der Motor kann parallel zum manuellen Antrieb durch den Fahrradfahrer zugeschaltet werden. Mit Hilfe des Motors kann der Fahrradfahrer noch große Steigungen überwinden und beschleunigen, selbst wenn ihm nach einer langen Tour schon die Kraft in seinen Armen und Beinen ausgegangen ist.

## Patentansprüche

1. Fahrrad mit wenigstens einem Arm- und wenigstens einem Beinantrieb, mit mindestens einer Handkurbel (6) und mindestens einer Tretkurbel (8), **dadurch gekennzeichnet, dass** es über wenigstens einen Stellmotor für die Lenkung verfügt.

2. Fahrrad nach einem der Anspruche 1, **dadurch gekennzeichnet, dass** die Lenkung wenigstens ein Steuerelement enthält.

3. Fahrrad nach einem der Ansprüche 1 bis 2, **dadurch gekennzeichnet, dass** das wenigstens eine Steuerelement wenigstens einen Joystick und/oder wenigstens einen Taster enthält.

4. Fahrrad nach einem der Ansprüche 1 bis 3, **dadurch gekennzeichnet, dass** das wenigstens eine Steuerelement wenigstens einen Handkurbelgriff (6.7) enthält.

5. Fahrrad nach einem der Ansprüche 1 bis 4, **dadurch gekennzeichnet dass**, die Lenkung wenigstens einen Sensor besitzt.

6. Fahrrad nach einem der Ansprüche 1 bis 5, **dadurch gekennzeichnet dass**, die Lenkung wenigstens eine Lenkungssteuerung besitzt.

7. Fahrrad nach einem der Ansprüche 1 bis 6, **dadurch gekennzeichnet dass**, das das Fahrrad wenigstens einen Hilfsmotor besitzt.

8. Fahrrad nach einem der Ansprüche 1 bis 7, **dadurch gekennzeichnet dass**, die mindestens eine Handkurbel (6) im Fahrradrahmen (7), oder in mindestens einem am Fahrradrahmen (7) befestigten Rahmenstück (7.1), gelagert ist.

9. Verfahren zum Fahren eines Fahrrades mit wenigstens einem Arm- und wenigstens einem Beinantrieb, bei dem der Fahrradfahrer das Fahrrad mit Armkurbelbewegungen und/oder mit Beinkurbelbewegungen antreibt, insbesondere zum Fahren des Fahrrades nach einem der Ansprüche 1 bis 8, **dadurch gekennzeichnet, dass** zum Lenken des Fahrrades wenigstens ein Motor wenigstens eine Lenkkraft erzeugt.

10. Verfahren nach Anspruch 9, **dadurch gekennzeichnet, dass** der Fahrradfahrer das Fahrrad lenkt, indem er wenigstens ein Steuerelement betätigt und oder bewegt.

11. Verfahren nach einem der Ansprüche 9 bis 10, **dadurch gekennzeichnet, dass** wenigstens ein Sensor den Lenkwinkel der Gabel (1) misst.

12. Verfahren nach einem der Ansprüche 9 bis 11, **dadurch gekennzeichnet, dass** der Fahrradfahrer das wenigstens eine Steuerelement über wenigstens eine Fingerbewegung und/oder wenigstens eine Daumenbewegung betätigt und oder bewegt.

13. Verfahren nach einem der Ansprüche 9 bis 12, **dadurch gekennzeichnet, dass** die Armkurbelbewegungen über wenigstens eine Handkurbel (6) erfolgen und die wenigstens eine Handkurbel (6) nicht drehbar in einer Gabel (1) gelagert ist.

14. Verfahren nach einem der Ansprüche 9 bis 13, **dadurch gekennzeichnet, dass** wenigstens ein Sensor wenigstens eine Positionsänderung, und oder wenigstens eine Betätigungskraft, und oder wenigstens eine Beschleunigung wenigstens eines Steuerelements misst.

15. Verwendung eines Fahrrades nach einem der Ansprüche 1 bis 8.

## Claims

1. Bicycle with at least one arm and at least one leg propulsion, with at least one hand crank (6) and at least one foot crank (8), **characterised in that** it possesses at least one servo-motor for the steering.

2. Bicycle according to Claim 1 , **characterised in that** the steering possesses at least one control element.

3. Bicycle according to one of Claims 1 to 2. **characterised in that** the at least one control element contains at least one joystick and/or at least one key.

4. Bicycle according to one of Claims 1 to 3, **characterised in that** the at least one control element contains at least one hand crank handle (6.7).

5. Bicycle according to one of Claims 1 to 4, **characterised in that** the steering possesses at least one sensor.

6. Bicycle according to one of Claims 1 to 5, **characterised in that** the steering possesses at least one steering control.

7. Bicycle according to one of Claims 1 to 6, **characterised in that** the bicycle possesses at least one auxiliary engine.

8. Bicycle according to one of Claims 1 to 7, **characterised in that** the at least one hand crank (6) is mounted in the bicycle frame (7) or in at least one frame piece (7.1) attached to the bicycle frame (7).

9. Method for the riding of a bicycle with at least one arm and at least one leg propulsion, in which the cyclist propels the bicycle with arm crank movements and/or with leg crank movements, in particular for the riding of a bicycle according to one of the Claims 1 to 8, **characterised in that** at least one engine produces at least one steering force for the steering of the bicycle.

10. Method according to Claim 9, **characterised in that** the cyclist steers the bicycle by operating and/or moving at least one control element

11. Method according to one of Claims 9 to 10, **characterised in that** at least one sensor measures the steering angel of the fork (1).

12. Method according to one of Claims 9 to 11, **characterised in that** the cyclist operates and/or moves the at least one control element via at least one finger movement and/or at least one thumb movement.

13. Method according to one of Claims 9 to 12, **characterised in that** the arm crank movements are made via at least one hand crank (6) and the at least one hand crank (6) is not mounted in a fork (1).

14. Method according to one of Claims 9 to 13, **characterised in that** at least one sensor measures at least one change of position and/or at least one operating force and/or at least one acceleration of at least one control element.

15. Use of a bicycle according to one of Claims 1 to 8.

## Revendications

1. Bicyclette avec au moins une transmission par le bras et au moins une transmission par la jambe, avec au moins une manivelle commandée par les mains (6) et au moins un pédalier (8), **se caractérisant par le fait qu'**elle dispose d'au moins un servomoteur pour la direction.

2. Bicyclette selon l'une des revendications 1, **se caractérisant par le fait que** la direction contient au moins un élément de conduite.

3. Bicyclette selon rune des revendications 1 à 2, **se caractérisant par le fait qu'**au moins un élément de conduite contient au moins un joystick et/ou au moins un bouton-poussoir.

4. Bicyclette selon l'une des revendications 1 à 3, **se caractérisant par le fait qu'**au moins un élément de conduite contient au moins un manche de manivelle commandée par les mains (6.7).

5. Bicyclette selon l'une des revendications 1 à 4, **se caractérisant par le fait que** la direction contient au moins un capteur.

6. Bicyclette selon rune des revendications 1 à 5, **se caractérisant par le fait que** la direction contient au moins une commande de direction.

7. Bicyclette selon l'une des revendications 1 à 6, **se caractérisant par le fait que** la bicyclette possède au moins un moteur auxiliaire.

8. Bicyclette selon l'une des revendications 1 à 7, **se caractérisant par le fait qu'**au moins une manivelle commandée par les mains (6) est logée dans le cadre de la bicyclette (7) ou dans au moins une partie de cadre (7.1) fixé sur le cadre de la bicyclette (7).

9. Procédé permettant de rouler avec une bicyclette dotée d'au moins une transmission par le bras et au moins une transmission
par la jambe, avec laquelle le cycliste entraîne la bicyclette en mettant en mouvement la manivelle à bras et/ou mettant en mouvement la manivelle à jambes, permettant en particulier de rouler selon l'une des revendications 1 à 8, **se caractérisant par le fait qu'**au moins un moteur génère au moins une force de conduite pour conduire la bicyclette.

10. Procédé selon la revendication 9, **se caractérisant par le fait que** le cycliste dirige la bicyclette en actionnant ou en mettant en mouvement au moins un élément de conduite.

11. Procédé selon l'une des revendications 9 à 10, **se caractérisant par le fait qu'**au moins un capteur mesure l'angle de direction de la fourche (1).

12. Procédé selon l'une des revendications 9 à 11, **se caractérisant par le fait que** le cycliste actionne et/ou met en mouvement au moins un élément de conduite par l'intermédiaire d'au moins un mouvement du doigt et/ou au moins un mouvement du pouce.

13. Procédé selon l'une des revendications 9 à 12, **se caractérisant par le fait que** les mouvements de la manivelle à bras se font par l'intermédiaire d'au moins une manivelle commandée par les mains et qu'au moins une manivelle commandée par les mains (6) n'est pas logée en rotation dans une fourche (1).

14. Procédé selon l'une des revendications 9 à 13, **se caractérisant par le fait qu'**au moins un capteur mesure au moins un changement de position, et/ou au moins une force d'actionnement, et/ou au moins une accélération d'au moins un élément de conduite.

15. Emploi d'une bicyclette selon l'une des revendications 1 à 8.
